# EUROPÄISCHE PATENTSCHRIFT

(11) **EP 3 713 889 B1**
(45) Veröffentlichungstag und Bekanntmachung des Hinweises auf die Patenterteilung: **14.10.2026**
(21) Anmeldenummer: 18811187.6
(22) Anmeldetag: 22.11.2018
(51) Int. Cl.: C03C 17/00, C03C 3/066, C03C 3/091, C03C 8/02, C03C 8/14, C03C 3/062, C03C 3/064, C03C 3/083

(54) **BESCHICHTETES GLAS- ODER GLASKERAMIK-SUBSTRAT UND VERFAHREN ZUR BESCHICHTUNG EINES SUBSTRATS**
COATED GLASS OR GLASS-CERAMIC SUBSTRATE AND METHOD FOR COATING A SUBSTRATE
SUBSTRAT EN VERRE OU VITROCÉRAMIQUE REVÊTU ET PROCÉDÉ DE REVÊTEMENT D'UN SUBSTRAT

(30) Priorität: 22.11.2017 DE 102017127624; 31.07.2018 US 201862712615 P
(43) Veröffentlichungstag der Anmeldung: 30.09.2020
(73) Patentinhaber: SCHOTT AG, 55122 Mainz (DE)
(72) Erfinder: MENKE-BERG, Yvonne, 65197 Wiesbaden (DE); MANGOLD, Stephanie, 55288 Schornsheim (DE); BOCKMEYER, Matthias, 55124 Mainz (DE); STEIGENBERGER, Vera, 65474 Bischofsheim (DE); O'RYAN, Adam, Sweetwater Tennessee 37874 (US); MOOSE, Matthew, Sweetwater TN 37874 (US); SCHWALL, Michael, Knoxville TN 37934 (US)
(74) Vertreter: Blumbach · Zinngrebe Patentanwälte PartG mbB
(86) Internationale Anmeldenummer: PCT/EP2018/082257
(87) Internationale Veröffentlichungsnummer: WO 2019/101880

(56) Entgegenhaltungen:
- EP-A2- 1 267 593
- EP-A2- 1 401 781
- WO-A1-2017/068368
- WO-A1-2017/216483
- DE-A1- 102010 031 866
- DE-A1- 102011 115 379

## Beschreibung

### Gebiet der Erfindung

Die Offenbarung betrifft allgemein beschichtete Glas- oder Glaskeramik-Substrate, bevorzugt solche mit hoher Temperaturbeständigkeit, hoher Festigkeit und einem niedrigen thermischen Ausdehnungskoeffizienten. Weitere Aspekte der Offenbarung betreffen eine Beschichtung, welche Poren umfasst und fluiddicht ausgebildet und geeignet ist für die Beschichtung eines Glas- oder Glaskeramik-Substrats, bevorzugt eines Glas- oder Glaskeramiksubstrats mit niedrigem thermischen Ausdehnungskoeffizienten, sowie ein Verfahren zur Beschichtung eines solchen Substrats.

### Hintergrund der Erfindung

Beschichtungen für Glas- oder Glaskeramik-Substrate, insbesondere Glas- oder Glaskeramik-Substrate mit niedrigem thermischen Ausdehnungskoeffizienten, beispielsweise für niedrigdehnenden Gläser aus der Familie der Silikatgläser oder für Glaskeramiken, sind bereits seit vielen Jahren bekannt.

Besondere Herausforderungen an solche Beschichtungen stellen sich insbesondere dann, wenn die sehr guten Festigkeitseigenschaften dieser Substrate auch nach einer Beschichtung erhalten bleiben sollen und gleichzeitig eine hohe Temperaturfestigkeit der Beschichtung gefordert ist. Handelt es sich um dekorative Beschichtungen, welche beispielsweise bei Gläsern oder Glaskeramiken, die betrieblich hohen thermischen Belastungen ausgesetzt sind, eingesetzt werden, so muss nicht nur die thermische Stabilität der optischen Anmutung dieser Beschichtungen sowie ihre Haftfestigkeit auf dem Substrat gewährleistet sein. Vielmehr sind hier auch andere Eigenschaften von Bedeutung, beispielsweise die Kratzfestigkeit, die Kompatibilität beispielsweise mit Klebern, welche für die Montage solcher Gläser oder Glaskeramiken beispielsweise in Halterungen oder zur Befestigung von Bauteilen verwendet werden, sowie auch die Wechselwirkung der Beschichtung im Kontakt mit Fluiden.

Beispielsweise ist es bekannt, dass Unterseitenbeschichtungen von transparenten, nicht volumengefärbten scheibenförmigen Gläsern oder Glaskeramiken, welche in Kochfeldern verwendet werden, entweder dicht ausgebildet sein müssen oder eine zweite, gegenüber den Durchtritt von Fluiden wie Gasen und Flüssigkeiten dicht ausgebildete Schicht benötigen. Andernfalls, also bei Vorliegen einer durchgehenden Porosität, kommt es zum Eindringen der Fluide, welche sich im Gebrauch eines Kochfeldes bilden, beispielsweise von Kondenswasser. Dieses führt mindestens zu optischen Veränderungen in der Beschichtung; je nach Art des Fluids kann es aber auch zum Auftreten von Schäden am Glas bzw. an der Glaskeramik kommen.

Diese Anforderungen gelten aber nicht nur für Unterseitenbeschichtungen für beispielsweise Kochfelder, sondern auch bei anderen Anwendungen, beispielsweise bei Sichtscheiben, wie sie in Öfen, wie Backöfen, oder in Kaminen eingesetzt werden. Auch hier soll durch die Beschichtung hindurch möglichst kein Fluid hindurchtreten können. Beispielsweise sollen Klebenähte o.ä. nicht sichtbar sein und es soll verhindert werden, dass im Betrieb eines Geräts oder einer Vorrichtung, beispielsweise also eines Backofens oder eines Kamins, entstehende Fluide als Verschmutzungen durch die Beschichtung hindurch sichtbar sind. Dies hat nicht nur eine ästhetische Komponente, sondern dient auch dem Schutz des Substratmaterials, welches gegebenenfalls durch solche Fluide angegriffen werden kann. Ein solcher korrosiver Angriff kann beispielsweise die Festigkeit eines beschichteten Substrats herabsetzen und damit zu einer verminderten Benutzersicherheit führen.

Im Stand der Technik sind Beschichtungen für Gläser oder Glaskeramiken, insbesondere Gläser oder Glaskeramiken mit niedrigem thermischen Ausdehnungskoeffizienten, bekannt.

Beispielsweise beschreibt die internationale Patentanmeldung WO 2012/167932 A1 eine rein anorganische Schicht, welche rissfrei aufgebracht werden kann und die eine Temperaturbeständigkeit bis zu 1000°C aufweist. Allerdings ist die Schicht porös ausgebildet.

Die internationale Patentanmeldung WO 2013/156617 A1 beschreibt einen dichten, nicht porösen Schichtverbund, wobei eine erste Schicht aufgebracht wird, welche porös ausgebildet ist, die die so erhaltenen Poren mit einem zweiten Material, welches polymerisch ausgebildet ist, verfüllt werden. Aufgrund dieser organischen Verfüllung der Poren ist die Beschichtung dabei nur bedingt temperaturstabil und insbesondere für den Einsatz bei hohen Temperaturen von > 400°C nicht mehr geeignet.

Die internationale Patentanmeldung WO 2010/081531 A1 betrifft eine porös ausgebildet Sol-Gel-Beschichtung.

Ebenso beschreiben auch die deutsche Offenlegungsschrift DE 10 2008 031 426 A1, die deutsche Offenlegungsschrift DE 10 2008 040 636 A1 sowie die US-amerikanische Schutzrechtsanmeldung US 2010/0047556 A1 lediglich auf Sol-Gel-Beschichtungen basierende poröse Schichten.

Die Porosität dieser Schichten wird dabei bewusst eingestellt, um die Unterschiede, welche sich hinsichtlich der thermischen Ausdehnungskoeffizienten der Schicht und dem Substrat bilden, in der Form abzufangen, dass durch die im bestimmungsgemäßen Gebrauch erfolgte Aufheizung und Abkühlung des Schichtverbundes keine so hohen thermomechanischen Spannungen induziert werden, dass eine ausreichende mechanische Festigkeit des beschichteten Glas- oder Glaskeramiksubstrats nicht mehr gegeben ist. Dies ist insbesondere für den Fall relevant, dass die Beschichtung auf der Unterseite bzw. Rückseite des Glas- oder Glaskeramiksubstrats angeordnet ist, also in der Seite, welche betrieblich vom Anwender abgewandt ist. In einem solchen Fall erfolgt die mechanische Belastung von oben bzw. von vorne, sodass etwaige, auf der Unterseite bzw. Rückseite angeordnete Risse die Stoß- sowie die Biegefestigkeit des Glases oder der Glaskeramik sehr stark beeinträchtigen, beispielsweise sogar so stark, dass Vorgaben hinsichtlich der Mindestfestigkeit nicht mehr eingehalten werden.

Die europäische Patentanmeldung EP 1 401 781 A2 beschreibt eine Beschichtung mit anorganischen Schäumen zum thermischen Isolieren von Geräten. Als Schäumungsmittel wird unter anderem Carbonat eingesetzt. Ein Dekorbezug ist nicht adressiert.

Poröse Beschichtungen für Gläser oder Glaskeramiken sind weiterhin aus der deutschen Patentschrift DE 100 14 373 C2 sowie der europäischen Patentschrift EP 1 267 593 B1 bekannt.

Schwierigkeiten ergeben sich bei diesen porösen Beschichtungen jedoch dann, wenn, wie oben ausgeführt, Fluide mit diesen Beschichtungen in Kontakt treten, beispielsweise neben Wasser und Öl auch Lebensmittel oder Klebstoffe. Um die Poren zu versiegeln, ist auch bekannt, beispielsweise ein auf Silikon basierendes Dichtmittel aufzubringen, wie in der USamerikanischen Schutzrechtsanmeldung US 2013/0266781 A1 beschrieben.

Bei solchen Versiegelungen ergeben sich jedoch stets zwei Probleme:
Die Versiegelungen sind zum einen in der Regel nicht ausreichend temperaturstabil für einen Einsatz bei sehr hohen Temperaturen von beispielsweise > 400°C.

Durch die Versiegelung der Poren wird der positive Effekt der Abmilderung von thermischen Spannungen, welche ursächlich durch die unterschiedlichen thermischen Ausdehnungskoeffizienten von Schicht und Substrat resultieren, aufgehoben. Es kommt als bei sehr starker Erhitzung nicht nur zum Versagen der Versiegelung hinsichtlich der Dichtwirkung, sondern auch zur deutlichen Festigkeitsminderung, beispielsweise durch Rissbildung.

Mit den bekannten Beschichtungen lassen sich daher lediglich Anwendungen adressieren, bei welchen die maximale Belastungstemperatur im Bereich bis höchstens 400°C liegt.

Es besteht daher Bedarf für die Bereitstellung von flüssigkeitsdichten Beschichtungen für Glas-oder Glaskeramik-Substrate, insbesondere solche mit niedrigem thermischen Ausdehnungskoeffizienten.

### Aufgabe der Erfindung

Aufgabe der Erfindung ist es allgemein, die bekannten Schwächen von beschichteten Glas- oder Glaskeramik-Substraten zu mildern, insbesondere hinsichtlich der Dichtigkeit und der Temperaturstabilität der Beschichtung.

Für Glaskeramiken und Gläser mit niedrigem Wärmeausdehnungskoeffizienten sind bisher keine wirtschaftlich herstellbaren Dekorüberzüge mit angepassten Wärmeausdehnungskoeffizienten verfügbar. Insbesondere bei vollflächigen Beschichtungen oder dichten Dekorierungen tritt eine Erniedrigung der Biegezugfestigkeit als gravierender Nachteil zutage. Es ist möglich, dieses Problem der Erniedrigung der Biegezugfestigkeit durch eine sehr lichte, also sehr dünne, Beschichtung zu umgehen, jedoch sind damit vollflächige Schichten zur Erzielung eines Schutzes oder optisch dichtere Dekorierungen als Design-Ausführung nicht möglich.

Die Aufgabe der Erfindung betrifft insbesondere die Bereitstellung von Glas- oder Glaskeramik-Substraten, vorzugsweise mit niedrigem thermischen Ausdehnungskoeffizienten, wobei das Substrat eine Beschichtung umfasst.

Ein weiterer Aspekt der Offenbarung betrifft die Bereitstellung von Beschichtungen, welche Poren umfassen und selbstversiegelnd ausgebildet ist.

Ein nochmals weiterer Aspekt der Offenbarung umfasst ein Verfahren zur Beschichtung eines Glas- oder Glaskeramik-Substrats mit einer solchen Schicht.

### Zusammenfassung der Erfindung

Die Aufgabe der Erfindung wird gelöst durch den Gegenstand der unabhängigen Ansprüche. Bevorzugte Ausführungsformen finden sich in den abhängigen Ansprüchen.

Das Glas- oder Glaskeramik-Substrat der vorliegenden Offenbarung ist mit einer Beschichtung umfassend geschlossene Poren versehen, wobei die Beschichtung als Barriere gegenüber dem Durchtritt von Fluiden, z.B. Wasser oder auch Wasserdampf, ausgebildet ist.

Die vorliegende Offenbarung stellt demzufolge ein Glas- oder Glaskeramik-Substrat zur Verfügung mit einer Beschichtung umfassend geschlossene Poren, wobei die Beschichtung als Barriere gegenüber dem Ein- und Durchtritt von Fluiden ausgebildet ist und eine Barrierewirkung entfaltet.

Auf diese Weise sind Fluide, welche beispielsweise im bestimmungsgemäßen Gebrauch des beschichteten Substrats mit diesem in Kontakt kommen, nicht störend in der Beschichtung selbst sichtbar. Insbesondere wird auf diese Weise ein Eindringen des Fluids in die Beschichtung verhindert, so dass diese quasi "wasserresistent" ist. Als "wasserresistent" oder als H₂O-resistent im Sinne der Offenbarung wird daher eine Beschichtung dann bezeichnet, wenn kein Wasserdampf durch die Schicht dringt.

Dies ist insbesondere für Vollflächenbeschichtungen von Vorteil, da Beschichtungen nach der vorliegenden Offenbarung in Form einer Unter- oder Rückseitenbeschichtung angeordnet sein können, etwa zu einer Ofeninnenseite hin gewendet sein können, und so im bestimmungsgemäßen Gebrauch auf der vom Benutzer abgewandten Seite des Glas- oder Glaskeramiksubstrats. In derartigen Fällen ist besonders vorteilhaft bei einer Betrachtung von außen, also von der der Beschichtung gegenüberliegenden Seite des Glas- oder Glaskeramiksubstrates aus gesehen kein Kondenswasser oder Schatten von Kondenswasser sichtbar.

Allgemein ist es aber auch möglich und kann sogar bevorzugt sein, dass die Beschichtung nach der vorliegenden Offenbarung nicht vollflächig, sondern beispielsweise lediglich mit einem Belegungsgrad von 40% oder mehr, z.B. für Rahmendruck bei Kaminsichtscheiben oder für Backofenscheiben, aufgebracht ist.

Sofern das Substrat als transparentes, nicht volumengefärbtes Substrat ausgebildet ist, ist die Barrierewirkung der Beschichtung beispielsweise bestimmbar in einem Test, bei welchem ein Tropfen eines fluiden Mediums, z.B. Wasser, auf die Beschichtung aufgebracht wird und anschließend für mindestens 10 Sekunden einwirkt und nach erfolgter Einwirkung abgewischt wird, wobei bei der Betrachtung der Beschichtung durch das Substrat hindurch die Einwirkstelle des Tropfens als solche nicht erkennbar ist, wenn dieser Test bestanden ist.

Derartige Prüfverfahren sind allgemein unter dem Begriff der Sichtprüfung bekannt und erfolgen in Anlehnung an die einschlägigen Normen, so die DIN EN 1330-10, DIN 25435-2 sowie DIN EN 13018. Vorliegend wird eine direkte oder indirekte Sichtprüfung durch einen Prüfer favorisiert. Bei der direkten Sichtprüfung erfolgt die Prüfung mit nicht unterbrochenem Strahlengang zwischen dem Auge des Prüfers und der zur prüfenden Fläche, wohingegen bei einer indirekten Sichtprüfung infolge einer Erfassung durch der zu prüfenden Fläche durch geeignete Foto- oder Videotechnik der Strahlengang unterbrochen ist. Ferner wird eine örtliche Sichtprüfung gemäß DIN EN 13018 favorisiert, bei der eine Mindestbeleuchtungsstärke, ein Abstand zur der zu prüfenden Fläche und ein Betrachtungswinkel des Prüfers definiert werden.

Die bei der Prüfung verwendete Mindestbeleuchtungsstärke beträgt dabei wenigstens 500 Ix auf der Prüffläche aus einer Entfernung von weniger als 600 mm. Der Betrachtungswinkel des Prüfers beträgt wenigstens 30°. Der Prüfer genügt dabei vorzugsweise den in den einschlägigen Normen, etwa der DIN EN 13018 und der der EN 473 festgelegten Anforderungen.

Ein solches Testverfahren ist insbesondere deshalb bevorzugt, weil es auf einfache Weise an die jeweiligen Einsatzfelder der beschichteten Glas- oder Glaskeramik-Substrate angepasst werden kann. Beispielsweise wird die Einwirkzeit in der Regel in Abhängigkeit vom jeweils betrachteten fluiden Medium ausgewählt und kann auch mehr als 10 Sekunden betragen.

Fluide im Sinne der vorliegenden Offenbarung umfassen vorzugsweise Flüssigkeiten, insbesondere Wasser, wässrige Flüssigkeiten, Alkohole, auf diesen Flüssigkeiten basierende oder diese Flüssigkeiten umfassende Flüssigkeiten, wie beispielsweise Fensterreiniger, und/oder Öle sowie Wasserdampf.

Eine bevorzugte Vorgehensweise zur Durchführung einer Sichtprüfung durch einen Prüfer wie vorstehend erläutert mit dem Ziel, die Wasserdichtigkeit bzw. die Feuchtedichtigkeit einer Beschichtung gemäß der vorliegenden Offenbarung festzustellen, umfasst dabei die folgenden Schritte:
- Aufbringen einer Flüssigkeit auf einen Bereich auf der Oberfläche der Beschichtung des Substrates,
- Einwirken der Flüssigkeit für die Dauer von 15 Sekunden,
- Abwischen der Restfeuchte der Flüssigkeit mit einem trockenen Lappen,
- Umdrehen des Substrates, so dass die Beschichtung auf der dem Prüfer abgewandten Seite des Substrates angeordnet ist, und
- Prüfen mittels Sichtprüfung, ob eine Farbänderung in dem Bereich oder einem an diesen Bereich angrenzenden Bereich erkennbar ist, wobei
   a) die Sichtprüfung bei Tagesslicht gemäß Normlichtart D65 erfolgt oder unter Beleuchtung wie einer Glühlampe, Energiesparlampe, Leuchtstofflampe, oder einer Leuchtdiode,
   b) die Beleuchtungsstärke dabei wenigstens 500 Ix beträgt bei einer Entfernung zur Beschichtung, also zur Prüffläche, von weniger als 600 mm, und
   c) der Betrachtungswinkel des Prüfers zwischen 5° und 90°, vorzugsweise bei wenigstens 30°, liegt, wobei bei dem erfindungsgemäßen Glas-oder Glaskeramiksubstrat bei der Betrachtung der Beschichtung durch das Substrat hindurch die Einwirkstelle des Tropfens nicht störend sichtbar und insbesondere als solche nicht erkennbar ist.

Die vorstehend genannte Sichtprüfung umfasst dabei insbesondere die Prüfung, ob ein Wasserrand und/oder ein Wasserfleck von der der beschichteten Seite gegenüberliegenden Seite des Substrates aus sichtbar ist.

Vorzugsweise werden die vorstehend genannten Schritte der Sichtprüfung mit unterschiedlichen Flüssigkeiten, also Fluiden, umfassend Wasser, Alkohol und/oder Fensterreiniger (z.B. "Sidolin" oder "Ajax"), durchgeführt
Bevorzugt weist das Glas- oder Glaskeramik-Substrat einen niedrigen thermischen Ausdehnungskoeffizienten, bevorzugt einen thermischen Ausdehnungskoeffizienten von weniger als 5*10⁻⁶/K im Temperaturbereich von 20°C bis 700°C auf.

Als thermischer Ausdehnungskoeffizient ist im Rahmen der vorliegenden Offenbarung der nominale mittlere thermische Längenausdehnungskoeffizient gemäß ISO 7991 bezeichnet, welcher in statischer Messung bestimmt ist.

Gemäß einer weiteren Ausführungsform der Offenbarung ist die Beschichtung als hochtemperaturstabile, selbstversiegelnde Beschichtung ausgebildet.

Als selbstversiegelnd wird eine Beschichtung vorliegend dann bezeichnet, wenn keine weitere Beschichtung notwendig ist, um eine ausreichende Dichtigkeit gegenüber dem Ein- bzw. Durchtritt von Fluiden zu verhindern. Die Schicht weist also gegenüber Fluiden eine Barrierewirkung auf. Die Poren umfassende Beschichtung gemäß Ausführungsformen der vorliegenden Offenbarung ist somit selbstversiegelnd, beispielsweise als Barriere gegenüber dem Durchtritt von Fluiden, ausgebildet.

Zudem zeichnet sich eine hochtemperaturstabile Beschichtung dadurch aus, dass sie bei Verwendung auf einer Kochplatte bei der normalen, bestimmungsgemäßen Erhitzung von dieser durch IR-Strahlung oder Induktionserhitzung nach dem Abkühlen keine Veränderung in der Farbe, der Adhäsion an das Substrat oder in der Transmission im Vergleich zu vor der Erhitzung aufweist.

Als hochtemperaturstabil wird daher im Rahmen der vorliegenden Offenbarung eine Beschichtung insbesondere dann bezeichnet, wenn sie nach einer thermischen Belastung, beispielsweise einer Belastung zur Überprüfung der IR-Heizstrahler-Tauglichkeit oder der Induktionseignung wie vorstehend ausgeführt, keine im Rahmen der Messgenauigkeit signifikanten Abweichungen beispielsweise der Transmission, insbesondere von τᵥᵢₛ (in-line-Transmission) im Wellenlängenbereich des sichtbaren Lichts (von ungefähr 380 nm Wellenlänge bis kleiner oder gleich 700 nm), der Festigkeit, insbesondere bestimmt mit dem Wert des Kugelfalltests, und/oder der Barrierewirkung gegen den Durchtritt von Fluiden zwischen dem Zustand vor der thermischen Belastung und dem Zustand nach thermischer Belastung aufweist.

Im Rahmen der vorliegenden Offenbarung werden die Begriffe der Schicht bzw. der Beschichtung in dem Sinne synonym verwendet, dass eine Schicht, sofern nicht ausdrücklich anders bezeichnet, ebenso wie eine Beschichtung jeweils als Materiallage, welche durch einen Auftrag eines Beschichtungsmaterials, beispielsweise einer Druckfarbe, auf ein Substrat erhalten worden ist, angesehen wird, mithin also sowohl eine Schicht als auch eine Beschichtung jeweils eine durch ein Beschichtungsverfahren erhaltene Materiallage ist.

Unter einem Substrat wird im Rahmen der vorliegenden Offenbarung ein Erzeugnis verstanden, dessen Oberfläche veredelt wird oder zu veredeln ist. Insbesondere wird unter einem Substrat ein Erzeugnis verstanden, dessen Oberfläche zu beschichten ist oder beschichtet wird.

Im Rahmen der vorliegenden Offenbarung ist in der Regel das Substrat dicker als die auf das Substrat aufgetragene Schicht bzw. Beschichtung ausgebildet. In der Regel kann davon ausgegangen werden, dass die Schicht eine Dicke von höchstens 500 µm aufweist. Ein Substrat wird hingegen eine Dicke von 1 mm Dicke oder mehr aufweisen.

Als scheibenförmig wird ein Substrat dann verstanden, wenn seine räumliche Ausdehnung in einer Raumrichtung eines kartesischen Koordinatensystems um mindestens eine Größenordnung geringer ist als in den anderen beiden, zu dieser einen Raumrichtung senkrechten Raumrichtungen. Hierbei wird die kleinste laterale Abmessung eines Erzeugnisses, wie eines Substrats, in der Regel als Dicke bezeichnet, die beiden anderen lateralen Abmessungen in der Regel als Länge und Breite. Die lateralen Abmessungen eines Erzeugnisses, wie eines Substrats, sind durch die das Erzeugnis begrenzenden Flächen bestimmt. Sofern ein Erzeugnis, wie beispielsweise ein Substrat, scheibenförmig ausgebildet ist, weist dieses in der Regel zwei Hauptflächen auf, welche senkrecht zur Dicke des Erzeugnisses, wie des Substrats, angeordnet sind. Diese Hauptflächen werden je nach genauer räumlicher Anordnung im Falle einer horizontalen Lagerung des Erzeugnisses, wie des Substrats, als Oberseite (welche dem Betrachter zugewandt ist) und als Unterseite (die dem Betrachter abgewandte Seite des Erzeugnisses, beispielsweise des Substrats) bezeichnet; im Falle einer vertikalen Lagerung des Erzeugnisses, wie eines Substrats, hingegen in der Regel als (einem Betrachter oder Benutzer zugewandte) Vorderseite und als (einem Betrachter oder Benutzer abgewandte) Rückseite.

Im Sinne der vorliegenden Offenbarung kann ein Substrat beispielsweise als ebene oder als gewölbte Scheibe vorliegen.

Unter einem Pigment wird allgemein ein Farbmittel verstanden, also eine farbgebende Substanz. Im Gegensatz zu Farbstoffen bestehen sie aus Teilchen und sind im Anwendungsmedium daher praktisch unlöslich. Pigmente können nach ihrer chemischen Struktur (anorganisch oder organisch), nach ihren optischen Eigenschaften (weiß, bunt, schwarz, Effekte) und nach ihren technischen Eigenschaften (Korrosionsschutz, Magnetismus) unterschieden werden. Der Farbreiz entsteht durch Absorption und Remission (Streuung oder Reflexion) bestimmter Frequenzanteile des sichtbaren Lichts. Maßgeblich für die Eigenschaften der Pigmente sind auch Festkörpereigenschaften wie Kristallstruktur, Kristallmodifikation, Teilchengröße und Teilchengrößenverteilung, letztere durch die spezifische Oberfläche.

Weiterhin sind solche Pigmente bekannt, welche zur Erzeugung eines bestimmten optischen Effekts, insbesondere einer metallischen Anmutung eingesetzt werden. Solche Pigmente werden auch als Effektpigmente bezeichnet. Effektpigmente umfassen beispielsweise Plättchen oder Flakes aus Metall, aus Glimmer oder aus Glas oder einem anderen anorganischen, in der Regel transparentem Material, beispielsweise SiO₂ oder Al₂O₃. Durch eine bestimmte Ausgestaltung der Beschichtung solcher transparenter Plättchen kann es dabei nicht nur zum Auftreten einer bestimmten Reflexion, sondern auch zum Auftreten von Farbeffekten infolge von Interferenzeffekten kommen. Beschichtungsmaterialien zur Erzeugung von bestimmten Effekten können in diesem Fall SiO₂ und TiO₂ umfassen. Gegebenenfalls werden als Beschichtungen auch solche Materialien verwendet, welche selbst absorbieren, beispielsweise Eisen umfassende Oxide.

Ein Beispiel für solche Effektpigmente sind die unter der Marke "Iriodin" bekannten, auf Glimmer basierenden Effektpigmente.

Unter einer Suspension wird im Rahmen der vorliegenden Offenbarung eine Aufschlämmung eines festen Bestandteils in einer Flüssigkeit verstanden. Beispielhaft umfasst sind vom Begriff der Suspension insbesondere Schlicker, wobei mit einem Schlicker hierbei die Aufschlämmung von im Wesentlichen, also zu mindestens 95 Gew.-%, bezogen auf den Feststoffgehalt, anorganischen Material besteht in einer Flüssigkeit. Die Flüssigkeit selbst kann wässrig sein, aber auch organisch ausgebildet sind, beispielsweise ein organisches Lösungsmittel umfassen. Üblicherweise haben solche Schlicker einen Feststoffgehalt zwischen 40 Gew.-% und 80 Gew.-% Feststoffgehalt, bezogen auf das Gesamtgewicht des Schlickers.

Im Sinne der vorliegenden Offenbarung sind vom Begriff der Suspension beispielhaft auch Druckfarben oder Druckpasten umfasst, welche ein Anpastverhältnis (Pulver:Medium) von 10:12 bis zu 10:2,5 aufweisen sowie Viskositäten (bestimmt mit Plattenviskosimeter), die zwischen 2000 und 10000 mPas bei einer Umdrehungsgeschwindigkeit von 200/s liegen..

T_{g} bezeichnet die Glastemperatur oder Transformationstemperatur eines Glases. Die Transformationstemperatur T_{g} ist bestimmt durch den Schnittpunkt der Tangenten an die beiden Äste der Ausdehnungskurve beim Messung mit einer Heizrate von 5K/min. Dies entspricht einer Messung nach ISO 7884-8 bzw. DIN 52324.

Beispielhaft kann die Beschichtung der vorliegenden Offenbarung eine Glasur oder eine Emaille umfassen. Als Glasur werden in der Regel Überzugsmassen bezeichnet, welche aus einem klaren oder eingefärbten Glas, welches auch als Glasfluss bezeichnet wird, bestehen. Emaillen sind Überzugsmassen, die neben einem Glasfluss zusätzlich Materialien, beispielsweise Farb- und/oder Effektpigmente, umfassen.

Auch Glasuren und Emaillen sind bereits seit langem bekannt. Sie werden bei Temperaturen, welche in der Regel zur Vermeidung von Verformungen beim Brand unterhalb der Erweichungstemperatur des zu beschichtenden Substrates liegen, eingebrannt, wobei die jeweilige Zusammensetzung des Glasflusses aufschmilzt und sich stabil mit der Oberfläche des zu beschichtenden Substrats verbindet. Der Brand dient auch der Verflüchtigung eingesetzter organischer Hilfsstoffe, welche beispielsweise als Suspensionsmitteln für den Auftrag der Überzugsmasse eingesetzt werden.

Bei der Beschichtung der Glas- oder Glaskeramik-Substrate, welche einen thermischen Ausdehnungskoeffizienten von 5*10⁻⁶/K oder mehr aufweisen, ist es möglich, Glasuren oder Emaillen mit angepassten thermischen Ausdehnungskoeffizienten zu finden. Für Substrate jedoch, welche eine niedrigen thermischen Ausdehnungskoeffizienten aufweisen, ist dies nicht möglich. Um eine kritische Reduktion der Festigkeit des Substrats zu vermeiden, wird daher die Beschichtung der vorliegenden Offenbarung so ausgestaltet, dass diese Poren umfasst. Dafür umfasst die Suspension der vorliegenden Offenbarung neben dem Glaspulver ein Mittel, welches sich bei Temperaturerhöhung unter Bildung einer flüchtigen Substanz zersetzt.

Beispielhaft kann die geschlossene Poren umfassende Beschichtung der vorliegenden Offenbarung daher gemäß einer Ausführungsform auch als Schaumemaille ausgebildet sein.

Gemäß einer weiteren Ausführungsform der Offenbarung ist das Substrat scheibenförmig ausgebildet, wobei die Dicke des Substrats zwischen mindestens 1 mm und höchstens 10 mm, bevorzugt zwischen mindestens 2 mm und höchstens 5 mm und besonders bevorzugt zwischen mindestens 2 mm und höchstens 4 mm beträgt.

Gemäß einer weiteren Ausführungsform ist die geschlossene Poren umfassende Beschichtung auf der Seite des Substrats angeordnet, welche im bestimmungsgemäßen Gebrauch vom Benutzer abgewandt ist. Insbesondere kann eine solche Beschichtung auf der Rückseite einer Sichtscheibe, wie einer Sichtscheibe einer Backofentür, oder einer Kamin.- oder Ofensichtscheibe angeordnet sein.

Bevorzugt ist die Beschichtung lateral strukturiert so aufgebracht, dass mindestens ein Bereich des Glas-oder Glaskeramik-Substrats frei von der Beschichtung ist. Beispielsweise ist dies dann von Vorteil, wenn elektrooptische Anzeigeelemente, wie beispielsweise Displays, am Substrat angeordnet sind.

Die Erfinder gehen davon aus, dass die Beschichtung umfassend die geschlossenen Poren nach der vorliegenden Offenbarung eine gewisse IR-Reflexion in der Form aufweist, dass eine Erniedrigung der Temperatur einer Seite, insbesondere der unbeschichteten Vorderseite einer Sichtscheibe (die dem Backofeninneren abgewandte Seite bei einer Backofentür, bzw. die dem Kamin abgewandte Seite, beim Kamin), beispielsweise einer Backofensichtscheibe, wie die Sichtscheibe einer Backofentür, oder die Sichtscheibe in einem Kamin oder einem Ofen, im Vergleich zu einer Beschichtung, welche keine Poren oder nur sehr wenige Poren, insbesondere keine oder nur sehr wenige geschlossene Poren umfasst, vorliegt.

Gemäß einer weiteren Ausführungsform der Offenbarung umfasst die Beschichtung Farb- und/oder Effektmittel, insbesondere ein Farbpigment und/oder ein Effektpigment, vorzugsweise ein IR-reflektierendes Farbpigment.

Als Pigmente können beispielsweise farbgebende Pigmente in Form von Metalloxiden eingesetzt werden, insbesondere Metalloxide mit Spinellstruktur, beispielsweise Cobalt umfassende Spinelle, insbesondere Cobalt-Aluminium-Oxid/-Spinell, Cobalt-Aluminium-Zink-Oxid/-Spinell, Cobalt-Aluminium-Silizium-Oxid/-Spinell, Cobalt-Titan-Oxid/-Spinell, Cobalt-Chrom-Oxid/-Spinell, Cobalt-Aluminium-Chrom-Oxid/-Spinell, Cobalt-Nickel-Mangan-Eisen-Chrom-Oxid/-Spinell, Cobalt-Nickel-Zink-Titan-Aluminium-Oxid/-Spinell, Chrom-Eisen-Nickel-Mangan-Oxid/-Spinell, Cobalt-Eisen-Chrom-Oxid/-Spinell, Nickel-Eisen-Chrom-Oxid/-Spinell, Eisen-Mangan-Oxid/- Spinell, Kupfer-Chrom-Spinell, Zirkon-Silizium-Eisen-Oxid/-Spinell, sowie weitere Oxide, beispielsweise Eisenoxide, Eisen-Chrom-Oxide, Eisen-Chrom-Zinn-Titan-Oxide, Nickel-Chrom-Antimon-Titan-Oxid oder Titanoxid. Selbstverständlich sind auch Mischungen dieser Pigmente möglich, insbesondere zur Erzielung besonderer Farbeindrücke. Ebenfalls kann Graphit als Pigment verwendet werden.

Gemäß einer Ausführungsform der Offenbarung kann die Beschichtung ein IR-reflektierendes Farbpigment umfassen. Unter einem IR-reflektierenden Farbpigment wird hierbei insbesondere ein Farbpigment verstanden, welches bei einer Wellenlänge von 1500 nm eine Remission von zumindest 50% aufweist. Durch die hohe Remission der Infrarot (IR)-Strahlung wird somit ein großer Teil der Wärmestrahlung remittiert bzw. Die Remission wurde hierbei gemäß der Messnorm ISO 134 68 bestimmt.

Des Weiteren weist das Pigment in dieser Weiterbildung einen TSR-Wert von zumindest 20% auf. Der TSR-Wert (*total solar reflectance*) gibt dabei Auskunft über den prozentualen Anteil der reflektierten elektromagnetischen Strahlung im Wellenlängenbereich von 200 nm bis 2500 nm und wird gemäß den Messnormen ASTM G 173 bestimmt.

Es hat sich hierbei gezeigt, dass ein hoher TSR-Wert der Pigmente das Remissionsverhalten einer aus der Paste hergestellten Beschichtung auch gegenüber der langwelligeren Wärmestrahlung beeinflusst. Hierbei ist ein hoher TSR-Wert vorteilhaft, um eine hohe Remission der Wärmestrahlung, d.h. von elektromagnetsicher Strahlung im Bereich von 1 bis 4 µm zu erhalten. Dies ist insofern überraschend, da die Wellenlängenbereiche der Wärmestrahlung und der Wellenlängenbereich, der für die Ermittlung des TSR-Wertes relevant ist, nur teilweise überlappen. Insbesondere bezieht sich der TSR-Wert als Transmissionswert für die solare Strahlung auch auf den Wellenlängenbereich von 200 nm bis 1000 nm, und damit auf wesentlich geringere Wellenlängen.

Gemäß einer Ausführungsform weist die Paste zumindest ein IR-reflektierendes Pigment einen TSR-Wert von zumindest 25 % auf. Alternativ oder zusätzlich weist das Pigment bei einer Wellenlänge von 1500 nm eine Remission gemessen gemäß ISO 134 68 von zumindest 60% oder sogar von zumindest 70 % auf.

Eine Ausführungsform sieht vor, dass die Partikel des IR-reflektierenden Pigments eine Größenerteilung mit einem d50-Wert im Bereich von 0,5 µm bis 2 µm aufweisen. Die geringe Partikelgröße ermöglicht hierbei einen Auftrag der Paste auch mit engmaschigen Sieben, beispielsweise mit Sieben mit einer Fadenzahl von 77 Fäden/cm oder sogar 100 Fäden/cm, so dass mit der Paste Beschichtungen bzw. Dekore mit hoher graphischer Auflösung mittels Siebdruck erzeugt werden können. Zudem bestimmt die Maschenweite des verwendeten Siebes zusammen mit dem Ölanteil und den Pulverdichten die Schichtdicke der Beschichtung nach dem Einbrand. Gemäß einer bevorzugten Ausführungsform weisen die IR-reflektierenden Pigmente eine Partikelgrößenverteilung mit einem d50-Wert im Bereich von 0,8 µm bis 1,8 µm auf. Gemäß einer Ausführungsform weisen die IR-reflektierenden Pigmente Partikel mit einer spezifischen Oberfläche im Bereich von 1,1 bis 8 m²/g, bevorzugt im Bereich von 1,8 bis 4,5 m²/g auf.

In der nachfolgenden Tabelle sind beispielhaft einige beim Siebdruck verwendeten Siebe aufgeführt.

| Siebbezeichnung im Text | Fadenzahl (cm⁻¹) | Garndurchmesser nominal (µm) | Maschenweite (µm) |
|---|---|---|---|
| | | | |
| 77T | 77 | 55 | 67 |
| 90T | 90 | 48 | 55 |
| 100T | 100 | 40 | 37 |

Durch die pigmenthaltige Beschichtung soll Strahlung möglichst gut reflektiert oder remittiert werden um auf diese Weise ein möglichst wenig erwärmtes Glas oder eine möglichst wenig erwärmte Glaskeramik des jeweiligen beschichteten Substrats bereitzustellen. Im Rahmen der vorliegenden Offenbarung soll insbesondere demgegenüber Reflexion und Remission in einem Wellenlängenbereich, der einer Temperatur von ca. 150° C bis maximal 500° C entspricht, möglichst hoch sein.

Für die abgestrahlte Leistung bei verschiedenen Wellenlängen wird jeweils angenommen, dass diese in Form von Schwarzkörperstrahlung vorliegt, bei welcher das abgestrahlte Spektrum durch Angabe der Temperatur definiert ist. Folglich können die vorliegend offenbarten Temperaturen entsprechenden Spektren von Schwarzkörperstrahlern mit hoher Genauigkeit zugeordnet werden.

Eine solche Ausführung eines Glas- oder Glaskeramiksubstrats mit einer Beschichtung führt dazu, dass auf diese Weise auch die Reflexion von Wärmestrahlung steuerbar ist. Besonders vorteilhaft ist dies dann, wenn das Glas- oder Glaskeramiksubstrat beispielsweise als Sichtscheibe für einen Ofen, wie einen Backofen, oder als Kaminsichtscheibe, oder beispielsweise als Sichtscheibe für einen sonstigen Verbrennungsraum ausgestaltet ist. Durch die Ausgestaltung der Beschichtung als ein IR-reflektierendes Farbpigment umfassend ist es möglich, die Reflexion von Wärmestrahlung, also IR-Strahlung, in den Ofenraum, beispielsweise in einen Backofen oder in einen Kamin oder in einen Verbrennungsraum hinein, zu erhöhen. Auf diese Weise können beispielsweise Verbrennungsvorgänge effizienter gestaltet werden, oder es ist möglich, den Energieverbrauch beispielsweise eines Backofens zu verringern, da weniger Wärmestrahlung durch die Scheibe hindurch nach außen abgeführt wird. Durch eine solche Ausgestaltung kann eine weitere Erniedrigung der Temperatur an der Vorderseite eines beschichteten Glas- oder Glaskeramiksubstrats erhalten werden.

Es hat sich gezeigt, dass insbesondere chromhaltige Farbpigmente, wie ein chromhaltiges Eisenoxid, ein chromhaltiger Hämatit und/oder einen Chrom-Eisen-Nickel-Spinell und/oder ein Cobaltchromitspinell und/oder Indiummanganyttriumoxid und/oder Niobiumschwefelzinnoxid und/oder Zinnzinktitanat und/oder Cobalttitanatspinell solche IR-reflektierenden Eigenschaften aufweisen. Vorzugsweise werden IR-reflektierende Farbpigmente mit einer schwarzen oder schwarz-braunen Färbung verwendet.

Die entsprechenden Pigmente weisen insbesondere eine hohe thermische Stabilität und eine hohe chemische Inertheit gegenüber den Glasbestandteilen des Glaspulvers in der Paste auf, was in Hinblick auf den Einbrand der Paste zur Herstellung der entsprechenden Emaillebeschichtung besonders vorteilhaft ist. So wird gemäß einer Ausführungsform die mögliche maximale Einbrandtemperatur nicht durch die Stabilität der Pigmente begrenzt. Dies ermöglicht in einer Weiterbildung der Erfindung den Einbrand der Paste auf einem Glas- oder Glaskeramiksubstrat bei hohen Temperaturen im Bereich von 500 bis 1000°C, so dass während des Einbrandvorgangs der Schicht das Glassubstrat thermisch vorgespannt werden kann.

Als besonders vorteilhaft hat sich die Verwendung von chromhaltigen Farbpigmenten als IR-reflektierendes Farbpigment herausgestellt. Vorzugsweise umfasst die Beschichtung als IR-reflektierendes Farbpigment ein chromhaltiges Eisenoxid, einen chromhaltigen Hämatit und/oder einen Chrom-Eisen-Nickel-Spinell. Diese Farbpigmente haben sich in Hinblick auf ihre spektralen Eigenschaften, insbesondere in Hinblick auf die Remission im IR-Bereich sowie in Hinblick auf ihre Temperaturstabilität als vorteilhaft herausgestellt. Hierbei ist die Temperaturstabilität dieser Farbpigmente nicht nur für die Verwendung des beschichteten Substrates, beispielsweise in einer Backofentür oder in einer Kaminsichtscheibe, sondern auch für den Herstellungsprozess der entsprechenden Beschichtung, welcher den Einbrand bei Temperaturen im Bereich von 500°C bis 1000°C umfasst, relevant.

Bevorzugt weist das IR-reflektierende Farbpigment eine schwarze oder schwarz-braune Färbung auf. Insbesondere wird das IR-reflektierende Farbpigment ausgewählt aus der Gruppe mit den Elementen der Pigmente CI Brown 29, CI Green 17 und Black CI 7.

Gemäß einem Ausführungsbeispiel der Erfindung weist das in der Paste enthaltene Glaspulver eine Partikelgrößenverteilung mit einem d50-Wert im Bereich von 0,1 µm und 3 µm und insbesondere im Bereich zwischen 0,1 µm und 2 µm auf. Entsprechende Partikelgrößen gewährleisten eine homogene Verteilung der Pigmente sowie die Ausbildung einer weitgehend homogenen Glasschicht während des Einbrandvorgangs.

Das Glas in der Paste enthält bevorzugt Zinkoxid und/oder Bismutoxid. Als besonders vorteilhaft haben sich hierbei Glaspulver herausgestellt, die einen Gehalt an Zinkoxid im Bereich von 0,1 bis 70 Gew.-% und insbesondere einen Zinkoxidgehalt im Bereich von 0,1 bis 30 Gew.-% aufweisen. Alternativ oder zusätzlich enthält das Glaspulver 0,1 bis 70 Gew.-% und insbesondere 8 bis 70 Gew.-% Bismutoxid. Der Gehalt an Zinkoxid bzw. Bismutoxid in den oben beschriebenen Ausführungsformen wirkt sich dabei insbesondere vorteilhaft auf die Erweichungstemperatur des Glases aus. Gemäß einer Weiterbildung dieser Ausführungsformen weisen die Glaspulver Erweichungstemperaturen im Bereich von 500 bis 950 °C. Bevorzugt ist die Erweichungstemperatur kleiner als 800 °C, oder sogar kleiner als 750 °C und besonders bevorzugt kleiner als 680 °C, jedoch mehr als 450°C auf. Durch die niedrigen Erweichungstemperaturen erfolgt bereits bei geringen Einbrandtemperaturen die Ausbildung einer homogenen Glasmatrix bzw. eines Glasflusses aus dem Glaspulver. Somit können Glassubstrate mit unterschiedlichen Glaszusammensetzungen (und somit unterschiedlichen Erweichungstemperaturen) mit der Paste beschichtet werden, ohne dass beim Einbrand die Viskosität des zu beschichtenden Glassubstrats erniedrigt wird.

Zudem wird durch den Gehalt an Bismutoxid im Glas die chemische Resistenz entsprechenden, d.h. der mit der Paste hergestellten, Beschichtung erhöht.

Da die Glasmatrix bzw. der Glasfluss in der Beschichtung des beschichteten Substrates die gleiche Zusammensetzung wie das Glaspulver in der Paste aufweist, gelten die Angaben bezüglich der Zusammensetzung des Glaspulvers entsprechend auch für die Zusammensetzung der Glasmatrix in der Beschichtung in einigen Ausführungsformen bzw. Weiterbildungen.

Gemäß einer Ausführungsform dieser Weiterbildung weist das Glaspulver in der Paste bzw. die Glasmatrix der entsprechenden Beschichtung folgende Zusammensetzung in Gew.-% auf:

| | | |
|---|---|---|
| SiO₂ | 30-75 | bevorzugt 44-75 |
| Al₂O₃ | 0-25 | bevorzugt 0,2-25, besonders bevorzugt von 2-25 |
| B₂O₃ | 0-30 | bevorzugt 1-30, besonders bevorzugt 5-30 |
| Li₂O | 0-12 | |
| Na₂O | 0-25 | bevorzugt 0-15 |
| CaO | 0-12 | |
| MgO | 0-9 | |
| BaO | 0-27 | |
| SrO | 0-4 | |
| ZnO | 0-35 | bevorzugt 0-20 |
| Bi₂O₃ | 0-5 | |
| TiO₂ | 0-10 | bevorzugt 0-5 |
| ZrO₂ | 0-7 | |
| As₂O₃ | 0-1 | |
| Sb₂O₃ | 0-1,5 | |
| F | 0-3 | |
| Cl | 0-1 | bevorzugt 0 |
| H₂O | 0-3. | |

Bevorzugt weist das Glas einen Mindestgehalt an Al₂O₃ von 0,2 Gew.-%, bevorzugt von mindestens 2 Gew.-% auf. Alternativ oder zusätzlich weist das Glas einen Gehalt von B₂O₃ von zumindest 1 Gew.-%, bevorzugt mindestens 5 Gew.-% auf.

Es hat sich weiterhin als vorteilhaft herausgestellt, wenn das Glas mindestens 1 Gew.-% eines Alkalioxides, ausgewählt aus der Gruppe von Na₂O, Li₂O und K₂O oder Mischungen dieser Oxide enthält.

Alternativ oder zusätzlich umfasst das Glas mindestens 1 Gew.-% eines weiteren Oxids oder einer Mischung von Oxiden, ausgewählt aus der Gruppe von CaO, MgO, BaO, SrO, ZnO, ZrO₂, und TiO₂.

Gemäß einer anderen Weiterbildung weist das Glas folgende Zusammensetzung in Gew.-% auf:

| | | |
|---|---|---|
| SiO₂ | 6-65, bevorzugt 10-65, besonders bevorzugt 15-65 | |
| Al₂O₃ | 0-20 | |
| B₂O₃ | 0-40, bevorzugt 1-30, besonders bevorzugt 3-30 | |
| Li₂O | 0-12 | |
| Na₂O | 0-18 | |
| K₂O | 0-17 | |
| CaO | 0-17 | |
| MgO | 0-12 | |
| BaO | 0-38 | |
| SrO | 0-16 | |
| ZnO | 0-70 | |
| TiO₂ | 0-5 | |
| ZrO₂ | 0-5 | |
| Bi₂O₃ | 0-75 | bevorzugt 0-60, besonders bevorzugt 5-60, ganz besonders bevorzugt 10-60 |
| CoO | 0-5 | |
| Fe₂O₃ | 0-5 | |
| MnO | 0-10 | |
| CeO₂ | 0-3 | |
| F | 0-3 | |
| Cl | 0-1 | |
| H₂O | 0-3. | |

In einer bevorzugten Ausführungsform der Weiterbildung weist das Glas einen Mindestgehalt an SiO₂ von 10 Gew.-%, bevorzugt von mindestens 15 Gew.-% auf. Alternativ oder zusätzlich weist das Glas einen Mindestgehalt an Bi₂O₃ von 5 Gew.-%, bevorzugt von mindestens 10 Gew.-% auf. Alternativ oder zusätzlich enthält das Glas zumindest 1 Gew.-%, bevorzugt zumindest 3 Gew.-% B₂O₃. Vorzugsweise beträgt der Gesamtgehalt der Alkalioxide Na₂O, Li₂O und K₂O zumindest 1 Gew.-%.

Das in der Paste enthaltene Glas bzw. der Glasfluss in der entsprechenden Beschichtung kann insbesondere ein alkalifreies Glas, ein alkalihaltigs Glas, ein Silikatglas, ein Borosilikatglas, ein Zinksilikatglas, ein Zinkboratglas, ein Zinkborsilikatglas, ein Bismutborsilikatglas, ein Bismutboratglas, ein Bismutsilikatglas, ein Phosphatglas, ein Zinkphosphatglas, ein Aluminosilikatglas oder ein Lithiumaluminosilikatglas sein. Gemäß einer Ausführungsform der Erfindung weist die Paste Glaspulver mit unterschiedlichen Glaszusammensetzungen auf.

Gemäß einer Ausführungsform dieser Weiterbildung weist die Beschichtung bei einer Wellenlänge von 1500 nm eine Remission von zumindest 35%, gemessen gemäß der Messnorm ISO 134 68, auf.

Es hat sich hierbei gezeigt, dass ein hoher TSR-Wert der Pigmente in der Beschichtung das Remissionsverhalten der hergestellten Beschichtung auch gegenüber der Wärmestrahlung beeinflusst. Hierbei hat sich ein hoher TSR-Wert als vorteilhaft für die Remission von Wärmestrahlung eines Temperaturbereiches von 200 bis 475 °C herausgestellt. Dies ist insofern überraschend, da die korrespondierende Wellenlänge für den oben genannten Temperaturbereich ihr Maximum im Bereich von 1 µm bis 4 µm aufweist, der TSR-Wert sich dagegen auf das solare Spektrum mit wesentlich geringeren Wellenlängen im Bereich von 200 nm bis 1000 nm bezieht. Gemäß einer bevorzugten Ausführungsform weist das Pigment einen TSR-Wert von zumindest 25 % auf.

Die Pigmente sind hierbei homogen in der Glasmatrix, im Folgenden auch als Glasfluss bezeichnet, verteilt. Gemäß einer Ausführungsform weisen die Pigmente eine Partikelgrößenverteilung mit einem d50-Wert im Bereich von 0,5 µm bis 2 µm, bevorzugt im Bereich von 0,8 µm bis 1,8 µm auf. Gemäß dieser Ausführungsform weisen die Pigmente somit eine Partikelgröße auf, die unterhalb der Wellenlänge der zu reflektierenden Wärmestrahlung liegt. Überraschenderweise zeigt die Schicht dennoch eine hohe Remission für Strahlung im IR-Bereich. So weisen die erfindungsgemäßen Schichten bei einer Wellenlänge von 1500 nm eine Remission von zumindest 35% auf. Gemäß einer bevorzugten Ausführungsform beträgt die Remission bei 1500 nm zumindest 40% oder sogar zumindest 45%.

In einer nochmals weiteren Ausführungsform weist die Beschichtung zumindest ein erstes und ein IR-reflektierendes Farbpigment auf. Durch das zweite IR-reflektierende Farbpigment kann insbesondere der Farbort der Beschichtung eingestellt werden. Bevorzugt umfasst die Beschichtung als zweites IR-reflektierendes Farbpigment einen Cobaltchromitspinell, ein Indiummanganyttriumoxid, ein Niobiumschwefelzinnoxid, ein Zinnzinktitanat und/oder einen Cobalttitanatspinell. Als besonders vorteilhaft hat sich die Verwendung eines der Farbpigmente aus der Gruppe mit den Elementen CI Pigment Blue 36, CI Pigment Blue 86, CI Pigment Yellow 227, CI Pigment Yellow 216, CI Pigment Green 26 und CI Pigment Green 50 herausgestellt.

Vorzugsweise beträgt der Anteil am zweiten IR-reflektierenden Pigment in der Beschichtung 0,75 bis 18,5 Gew.-%, besonders bevorzugt 4,5 und 14 Gew.-%. Gemäß einer Ausführungsform beträgt das Volumen-Verhältnis zwischen dem Volumen des zweiten Pigments zum Volumen des ersten Pigments 0,03 bis 0,6, bevorzugt 0,05 bis 0,56 und besonders bevorzugt 0,14 bis 0,47.

Durch eine solche Ausgestaltung kann neben einer weiteren Erniedrigung der Temperatur an der Vorderseite eines beschichteten Glas- oder Glaskeramiksubstrats durch das zweite IR-reflektierende Pigment zudem der Farbort der Beschichtung eingestellt werden.

Als Effektpigmente werden bevorzugt Plättchen- oder stäbchenförmige Pigmente verwendet, beispielsweise auf Glimmer- oder Iriodinbasis.

Vorteilhaft umfasst das Substrat ein oxidisches Glas oder eine oxidische Glaskeramik, bevorzugt ein silikatisches Glas oder eine silikatische Glaskeramik, besonders bevorzugt eine Lithium-Aluminium-Silikat-Glaskeramik

Gemäß einer weiteren Ausführungsform umfasst das Substrat ein Kalknatronglas oder ein Borosilikatglas. Bevorzugt ist das Glas zur Festigkeitserhöhung thermisch vorgespannt.

Die Beschichtung kann auch organische Substanzen umfassen. Dabei handelt es sich in der Regel um nicht vollständig zersetzte Rest organischer Verbindungen, welche der Suspension zugesetzt wurden, beispielsweise in Form von Lösungsmitteln. Auch kann es sich dabei um die Reste nicht vollständig zersetzter, organisch basierter Blähmittel handeln. Gemäß einer Ausführungsform ist die Beschichtung im Wesentlichen anorganisch ausgebildet. Im Wesentlichen anorganisch bedeutet hierbei, dass die Beschichtung mindestens 95 Gew.-% anorganische Bestandteile umfasst, bevorzugt mindestens 98 Gew.-% anorganische Bestandteile und besonders bevorzugt mindestens 99 Gew.-% anorganische Bestandteile. Ganz besonders bevorzugt beträgt der Anteil der anorganischen Bestandteile der Beschichtung 99,9 Gew.-% oder mehr.

Gemäß einer weiteren Ausführungsform der Offenbarung sind die thermischen Ausdehnungskoeffizienten des Substrats sowie der Beschichtung so aufeinander abgestimmt, dass der resultierende thermische Ausdehnungskoeffizient der Beschichtung und der thermische Ausdehnungskoeffizient des Substrats voneinander um nicht mehr als 4*10⁻⁶/K im Temperaturbereich von 20°C bis 700°C voneinander abweichen.

Hierbei wird hinsichtlich der Beschichtung auf den resultierenden thermischen Ausdehnungskoeffizienten abgestellt, da es sich bei der Beschichtung in der Regel um ein inhomogenes Material, welches Materialien mit unterschiedlichen Ausdehnungskoeffizienten umfasst, insbesondere einen Glasfluss sowie Poren und optional ein Pigment und/oder sonstige Bestandteile. Beachtlich ist also insofern nicht der resultierende thermische Ausdehnungskoeffizient, welcher durch das Poren umfassende Gefüge sowie die thermischen Ausdehnungskoeffizienten der einzelnen Bestandteile der Beschichtung resultiert.

Gemäß einer Ausführungsform der Offenbarung weist der resultierende thermische Ausdehnungskoeffizient der Beschichtung einen Wert zwischen höchstens 9*10⁻⁶/K und mindestens 3*10⁻⁶/K auf.

Beispielsweise kann die Glaskeramik als transparente, nicht volumengefärbte Glaskeramik ausgebildet sein. Beispielhaft kann die Glaskeramik eine Zusammensetzung aus einem der folgenden Zusammensetzungsbereich in Gew.-% aufweisen:

| Elementoxid | Glaskeramik Zusammensetzung | |
|---|---|---|
| | Bereich 1 | Bereich 2 |
| SiO₂ | 66-70 | 50-80 |
| Al₂O₃ | >19,8-23 | 12-30 |
| Li₂O | 3-4 | 1-6 |
| MgO | 0-1,5 | 0-5 |
| ZnO | 1-2,2 | 0-5 |
| BaO | 0-2,5 | 0-8 |
| Na₂O | 0-1 | 0-5 |
| K₂O | 0-0,6 | 0-5 |
| TiO₂ | 2-3 | 0-8 |
| ZrO₂ | 0,5-2 | 0-7 |
| P₂O₅ | 0-1 | 0-7 |
| Sb₂O₃ | Übliche Mengen | 0-4 |
| As₂O₃ | Übliche Mengen | 0-2 |
| CaO | 0-0,5 | 0 |
| SrO | 0-1 | 0 |

Beispielhaft können weiterhin solche Glaskeramiken zum Einsatz kommen, welche unter den Namen CERAN^{®}, beispielsweise CERAN^{®} Cleartrans oder Zerodur vertrieben werden.

Beispielhaft kann das Glassubstrat eine Zusammensetzung aus einem der folgenden Zusammensetzungsbereich in Gew.-% aufweisen:

| Elementoxid | Glas Substrat Zusammensetzung (wt%) | | | |
|---|---|---|---|---|
| | Bereich 1 | Bereich 2 | Bereich 3 | Bereich 4 |
| SiO₂ | 60-80 | 60-85 | 40-55 | 65-80 |
| Al₂O₃ | <2 | 5-15 | 15-30 | 0-5 |
| Li₂O | 0-5 | 0-5 | 0-5 | 0-20 |
| MgO | 0-5 | 0-5 | 2-10 | 0-15 |
| ZnO | 0-10 | 0-5 | 0-5 | 0-5 |
| BaO | 0-5 | 0-5 | 0-5 | 0-5 |
| Na₂O | 10-20 | 2,5-12,5 | 2,5-12,5 | 0-20 |
| K₂O | 5-15 | 0-5 | 0-5 | 0-20 |
| B2O3 | 0-3 | 12-25 | 12-25 | 0-5 |
| P₂O₅ | 0-1 | 0-2,5 | 0-2,5 | 0-1 |
| CaO | 5-15 | 0-1 | 5-15 | 0-15 |
| SrO | 0-1 | 0-1 | 0-1 | 0-1 |
| Sb₂O₃ | Übliche Mengen | Übliche Mengen | Übliche Mengen | Übliche Mengen |
| As₂O₃ | Übliche Mengen | Übliche Mengen | Übliche Mengen | Übliche Mengen |

Beispielhaft können weiterhin Substrate auf Kalknatronglas-, Alumosilikatglas- oder Borosilikatglas-Basis verwendet werden. Bevorzugt ist das Glas zur Festigkeitserhöhung thermisch oder chemisch vorgespannt.

Gemäß einer Ausführungsform der Offenbarung weist die Beschichtung eine Dicke zwischen mindestens 0,1 µm und höchstens 500 µm, bevorzugt zwischen mindestens 1 µm und höchstens 100 µm, besonders bevorzugt zwischen mindestens 1,5 µm und höchstens 20 µm auf.

Gemäß einer weiteren Ausführungsform der Offenbarung ist das Substrat so ausgebildet, dass die Beschichtung als für elektromagnetische Strahlung im Wellenlängenbereich von 380 nm bis 780 nm im Wesentlichen undurchlässig ausgebildet ist, insbesondere so, dass im bestimmungsgemäßen Gebrauch unterhalb des Substrats angeordnete Bauteile nicht sichtbar sind.

Im Wesentlichen undurchlässig, auch als "blickdicht" bezeichnet, ist die Beschichtung dann ausgebildet, wenn τᵥᵢₛ (in-line-Transmission) im Wellenlängenbereich des sichtbaren Lichts (von ungefähr 380 nm Wellenlänge bis kleiner oder gleich 700 nm) einen Wert von weniger als 10% annimmt.

Die Erfindung betrifft ein Verfahren, mit welchem ein Glas- oder Glaskeramik-Substrat, bevorzugt ein Substrat mit einem niedrigen thermischen Ausdehnungskoeffizienten, bevorzugt mit einem thermischen Ausdehnungskoeffizienten von weniger als 5*10⁻⁶/K im Temperaturbereich von 20°C bis 700°C, beschichtet werden kann. Die aufgetragene Beschichtung ist dabei Poren umfassend ausgebildet, sodass eine Beschichtung, welche als Barriere gegenüber dem Durchtritt von Fluiden ausgebildet ist, vorliegt.

Das Verfahren umfasst dabei die folgenden Schritte:
a. Herstellen einer Suspension. Die Suspension umfasst ein Glaspulver sowie ein Mittel, welches sich bei Temperaturerhöhung unter Bildung einer flüchtigen Substanz zersetzt.

Beispielhaft sind hiervon solche Mittel umfasst, welche Gas abspalten. Bevorzugt sind die Mittel so ausgebildet, dass deren Anionen im Temperaturbereich der viskosen Schmelze des Glasflusses Gas bilden und die Kationen des Mittels ohne Beeinträchtigung der gewünschten Eigenschaften in die Glasmatrix eingebunden werden. Solche Mittel werden auch als Blähmittel oder Schäumungsmittel bezeichnet.

Als Blähmittel kommen Phosphate in Betracht.

Neben den genannten anorganischen Stoffen können auch organische Stoffe als Blähmittel Verwendung finden. Beispielsweise umfasst dies Stoffe, welche sich bei den hier betrachteten Temperaturen unter Gasbildung zersetzen, insbesondere Tartrate wie Kaliumhydrogencarbonat, aber auch Zucker, Holzstaub, Weizenmehl oder Stärke.

Auch bestimmte Oxide zersetzen sich unter Abspaltung eines Gases, beispielsweise Cer(IV)oxid oder Mangan(IV)oxid.

Allgemein werden unter einem Bläh- oder Schäumungsmittel solche Mittel verstanden, welche sich bei Temperaturerhöhung unter Bildung mindestens einer bei Zersetzungstemperatur des Blähmittels flüchtigen Substanz zersetzen. Als flüchtige Substanz wird hierbei insbesondere ein Gas verstanden. Allerdings ist dabei zu beachten, dass es möglich ist, dass die bei Zersetzungstemperatur entstehende flüchtige Substanz möglicherweise nach Abkühlung des beschichteten Substrats auf Raumtemperatur in einem anderen Aggregatszustand vorliegen kann. Sofern sich beispielsweise bei Zersetzungstemperatur aus einem Blähmittel Wasserdampf als flüchtige Substanz ausbildet, kann es sein, dass nach der Abkühlung des beschichteten Substrats in der Pore nicht mehr Wasserdampf, sondern flüssiges Wasser vorliegt.

Da die durch die Zersetzung eines Blähmittels entstandenen Poren nach der vorliegenden Offenbarung geschlossen ausgebildet sind, wird davon ausgegangenen, dass die bei Zersetzungstemperatur flüchtige Substanz zumindest partiell in den Poren der Beschichtung vorliegen kann. Jedoch muss dies nicht notwendigerweise in flüchtiger Form sein. Es ist beispielsweise auch möglich, dass die bei Zersetzungstemperatur flüchtige Substanz bei Raumtemperatur als Kondensat vorliegt.

Eine beispielhafte Aufstellung geeigneter Blähmittel, welche alleine oder in Kombination eingesetzt werden könne, ist der folgenden Tabelle zu entnehmen.

| Substanzgruppe | Beispiele | |
|---|---|---|
| | Trivialname | Formel |
| Sulfate | Gips | CaSO₄*2H₂O |
| | Anhydrit, Cer(IV)sulfat-Hydrat | CaSO₄ |
| | | Ce(SO₄)₂*2H₂O |
| Carbonate | Pottasche | K₂CO₃ |
| | Kalkstein | CaCO₃ |
| | Magnesit | MgCO₃ |
| Phosphate | | Na₄P₂O₇*10H₂O |
| | | Na₂H₂P₂O₇*2H₂O |
| | | NaHPO₄*2H₂O |
| Borate | Borax | Na₂[B₄O₅(OH)₄]*8H₂O |
| Manganite | Kaliumpermanganat | KMnO₄ |
| Silikate | Tonminerale, z.B. | |
| | Kaolinit | Al₄[(OH)₈Si₄O₁₀] |
| Carbide | Siliziumcarbid | SiC |
| | Calciumcarbid | CaC₂ |
| Organische Stoffe | Kaliumhydrogentartrat | KC₄H₅O₆ |
| | Weizenmehl | |
| | Kohlenhydrat, z.B. Zucker | |
| | Holzstaub | |
| Elemente | Kohlenstoff | C |
| Oxide | Cer(IV)oxid | CeO₂ |
| | Mangan(IV)oxid | MnO₂ |
| | Silicagel | SiO₂*xH₂O |
| Anorganisch-organische Mischungen | Umfassend Backpulver, Dinatriumphosphat, Natriumhydrogencarbonat, Stärke | |

Es hat sich gezeigt, dass nach der Erfindung besonders vorteilhafte Resultate mit Blähmitteln, welche Phosphate umfassen, erzielt werden, insbesondere bei Schichtdicken der Beschichtung zwischen 0,1 µm und 500 µm.

Weiterhin konnten vorteilhafte Ergebnisse nach der Erfindung erzielt werden mit Blähmitteln, welche Stärke umfassen. Insbesondere hat sich gezeigt, dass Reisstärke, Maisstärke und Kartoffelstärke als Blähmittel besonders geeignet sind.

Die räumliche Ausgestaltung bzw. die Form der Poren kann durch das jeweilige verwendete Blähmittel beeinflusst werden. Hierbei können wohl poröse Emaillen mit Poren mit einer weitgehend symmetrischen Struktur als auch poröse Emaillen mit anisotropisch ausgebildeten Poren erhalten werden. Die nachfolgende Tabelle zeigt verschiedene Blähmittel sowie die daraus resultierenden Porenformen.

Das Glaspulver ist beispielhaft ausgewählt aus folgendem Zusammensetzungsbereich in Gew.-%:

| | | |
|---|---|---|
| SiO₂ | 30-75 | bevorzugt 44-75 |
| Al₂O₃ | 0-25 | bevorzugt 0,2-25, besonders bevorzugt 2-25 |
| B₂O₃ | 0-30 | bevorzugt 1-30, besonders bevorzugt 5-30 |
| Li₂O | 0-12 | |
| Na₂O | 0-25 | bevorzugt 0-15 |
| CaO | 0-12 | |
| MgO | 0-9 | |
| BaO | 0-27 | |
| SrO | 0-4 | |
| ZnO | 0-35 | bevorzugt 0-20 |
| Bi₂O₃ | 0-5 | |
| TiO₂ | 0-10 | bevorzugt 0-5 |
| ZrO₂ | 0-7 | |
| As₂O₃ | 0-1 | |
| Sb₂O₃ | 0-1,5 | |
| F | 0-3 | |
| Cl | 0-1 | bevorzugt 0 |
| H₂O | 0-3. | |

Das Glas umfasst hierbei vorteilhaft einen Mindestgehalt an Al₂O₃ von 1 Gew.-%, bevorzugt von mindestens 2 Gew.-%.

Gemäß einer weiteren vorteilhaften Ausführungsform umfasst das Glas mindestens 1 Gew.-% B₂O₃, bevorzugt mindestens 5 Gew.-%.

Gemäß einer nochmals weiteren vorteilhaften Ausführungsform umfasst das Glas mindestens 1 Gew.-% eines Alkalioxides, ausgewählt aus der Gruppe von Na₂O, Li₂O und K₂O oder Mischungen dieser Oxide auf.

Gemäß einer nochmals weiteren vorteilhaften Ausführungsform umfasst das Glas mindestens 1 Gew.-% eines weiteren Oxids oder einer Mischung von Oxiden, ausgewählt aus der Gruppe von CaO, MgO, BaO, SrO, ZnO, ZrO₂, und TiO₂.

Gemäß einer weiteren Ausführungsform ist das Glas aus dem folgenden Zusammensetzungsbereich in Gew.-% ausgewählt:

| | |
|---|---|
| SiO₂ | 6-65, bevorzugt 10-65, besonders bevorzugt 15-65 |
| Al₂O₃ | 0-20 |
| B₂O₃ | 0-40, bevorzugt 1-30, besonders bevorzugt 3-30 |
| Li₂O | 0-12 |
| Na₂O | 0-18 |
| K₂O | 0-17 |
| CaO | 0-17 |
| MgO | 0-12 |
| BaO | 0-38 |
| SrO | 0-16 |
| ZnO | 0-70 |
| TiO₂ | 0-5 |
| ZrO₂ | 0-5 |
| Bi₂O₃ | 0-75 bevorzugt 0-60, bevorzugt 5-60, besonders bevorzugt 10-60 |
| CoO | 0-5 |
| Fe₂O₃ | 0-5 |
| MnO | 0-10 |
| CeO₂ | 0-3 |
| F | 0-3 |
| Cl | 0-1 |
| H₂O | 0-3. |

Der Glasfluss kann weiterhin ausgewählt sein aus den folgenden Glasarten: alkalifreie Gläser, alkalihaltige Gläser, Silikatgläser, Borsilikatgläser, Zinksilikatgläser, Zinkboratgläser, Zinkborsilikatgläser, Bismutborsilikatgläser, Bismutboratgläser, Bismutsilikatgläser, Phosphatgläser, Zinkphosphatgläser, Aluminosilikatgläser oder Lithiumaluminosilikatgläser.

Selbstverständlich ist es auch möglich, dass das Glaspulver Mischungen unterschiedlicher Gläser umfasst.

Beim Herstellen der Suspension ist es möglich, zunächst lediglich das Glaspulver in ein Suspendierungsmittel einzubringen. Das Suspendierungsmittel ist als Flüssigkeit ausgebildet und kann beispielsweise Wasser umfassen. Bevorzugt umfasst das Suspendierungsmittel Lösungsmittel, beispielsweise organische Lösungsmittel. Die Lösungsmittel weisen bevorzugt einen Dampfdruck von weniger als 10 bar, bevorzugt weniger als 5 bar und besonders bevorzugt von weniger als 1 bar aufweisen. Dies umfasst beispielsweise Wasser, n-Butanol, Diethylenglykolmonoethylether, Tripropylenglykolmonomethylether, Terpineol und n-Butylacetat, n-(n-Butoxyethoxy)ethanol, n-Methoxy-methylethoxy-propanol, n-Methoxy-methylethoxy-propanol, welche allein oder auch in Mischungen vorliegen können. Auch möglich ist der Einsatz sogenannter kommerziell erhältlicher Siebdrucköle.

Um die gewünschte Viskosität einstellen zu können, werden entsprechende Additive, welche anorganisch oder organisch ausgebildet sein können, verwendet. Organische Additive umfassen beispielsweise Hydroxyethyl-Cellulose und/oder Hydroxypropyl-Cellulose und/oder Xanthan und/oder Polyvinylalkohol und/oder Polyethylenalkohol und/oder Polyethylenglykol, Blockcopolymere und/oder Triblockcopolymere und/oder Baumharze und/oder Polyacrylate und/oder Polymethacrylate.

Nach dem Einbringen des Pulvers in das Suspendierungsmittel erfolgt in einem nächstens Schritt die Homogenisierung der Mischung, beispielsweise in einem Drei-Walzen-Stuhl.

Es ist weiterhin möglich, nun ein weiteres Pulver, welches beispielsweise das Blähmittel umfasst, in ein weiteres Suspendierungsmittel einzubringen und zu homogenisieren. Anschließend können die beiden Suspensionen miteinander vermischt werden.

Es ist auch möglich, zunächst eine Mischung der unterschiedlichen Pulver herzustellen, beispielsweise umfassend ein Glaspulver, ein Blähmittel sowie ein Pigment, und diese Mischung beispielsweise in einem Taumler zu homogenisieren. Anschließend kann dann dieses Pulver wie vorstehend beschrieben angepastet werden.

Die Suspension hat bevorzugt eine Viskosität bei einer Scherrate von 200/s, gemessen mit einem Kegel-Plattenviskosimeter, zwischen 2.000 mPas bis 20.000 mPas, bevorzugt zwischen 2.500 mPas und 15.000 mPas, besonders bevorzugt zwischen 3.000 mPas bis 10.000 mPas.

b. Aufbringen der Suspension auf ein Substrat, sodass zumindest ein Teil des Substrats mit der Suspension belegt sind.

Das Aufbringen der Suspension auf das Substrat, wie beispielsweise einem Glas- oder Glaskeramiksubstrat, insbesondere einem Glas-oder Glaskeramiksubstrat mit einem niedrigen thermischen Ausdehnungskoeffizienten, kann vollflächig erfolgen, allerdings ist es auch möglich, dass die Suspension in Form bestimmter Muster aufgebracht wird. Beispielsweise können auf diese Weise Muster oder Schriftzeichen oder sonstige Raster auf das Substrat aufgebracht werden.

Als Auftragsverfahren eignen sich prinzipiell alle üblichen Flüssigbeschichtungsverfahren. Beispielsweise kann die Suspension in einem Druckverfahren, insbesondere Siebdruck, Tampondruck oder Ink-Jet-Druck, aufgebracht werden. Auch ein Auftrag in einem Abziehbildverfahren ist möglich. Auch ein Auftrag mittels Sprühen, Spin-Coating oder Roll-Coating ist möglich. Um eine optimale Verarbeitbarkeit der Suspension zu gewährleisten, kann die Suspension durch verschiedene Hilfsstoffe, beispielsweise Additive, Lösungsmittel oder Thixotropierungsmittel, auf das jeweilige Auftragsverfahren angepasst werden. Die notwendigen, meist organischen, Zusatzstoffe, verflüchtigen sich beim Einbrand.

Besonders bevorzugte Auftragsverfahren umfassen Ink-Jet-Druck, Offset-Druck, Tampondruck, Nassabziehbilder, Siebdruck, Tauchbeschichtung, Rollenbeschichtung, Sprühbeschichtung, Rakeln, Fluten und Spin-Coating.

c. vorzugsweise Fixieren der in Schritt b aufgebrachten Suspension auf dem Substrat, vorzugsweise bei einer Temperatur zwischen 0°C und 300°C.

Nach dem in Schritt b erfolgten zumindest teilweisen Auftrag der Suspension auf das Substrat, wie beispielsweise ein Glas- oder Glaskeramiksubstrat, insbesondere ein Glas- oder Glaskeramiksubstrat mit einem niedrigen thermischen Ausdehnungskoeffizienten, erfolgt vorzugsweise das Fixieren der Suspension auf dem Substrat. Dies kann beispielsweise durch einen Trocknungsschritt bei erhöhten Temperaturen erfolgen, beispielsweise bei einer Temperatur zwischen 0°C und 300°C. Das Fixieren der Suspension auf dem Substrat ist insbesondere dann von Vorteil, wenn nach dem erfolgten Auftrag der Suspension auf das Substrat dieses in ein anderes Prozessaggregat verbracht werden muss, beispielsweise zur Durchführung weiterer Prozessschritte. Je nach der genauen Zusammensetzung der Suspension haben sich als bevorzugte Bereiche für das Fixieren ein Temperaturbereich zwischen 0°C und 100°C sowie zwischen 100°C und 300°C als bevorzugt herausgestellt.

Neben dem rein thermischen Fixieren der Suspension auf dem Substrat ist es auch möglich, das Fixieren durch IR-Strahlung und/oder durch UV-Strahlung zu unterstützen. Auch kann bei geeigneter Einstellung der Suspension das Fixieren allein durch IR-Strahlung und/oder UV-Strahlung erfolgen.

d. Tempern des zumindest teilweise beschichteten Substrats bei einer Temperatur zwischen 500°C und 900°C, vorzugsweise 550°C und 900°C, sodass sich das Blähmittel unter Bildung mindestens einer flüchtigen Substanz zersetzt und in der Beschichtung geschlossene Poren ausgebildet sind.

Bevorzugt erfolgt das Tempern bei einer Temperatur zwischen 500°C und 900°C , vorzugsweise 550°C und 900°C.

Während des Temperns kommt es zum einen zur Zersetzung des Blähmittels, gleichzeitig folgt der Einbrand der Beschichtung auf dem Substrat. In der Folge bildet sich eine geschlossene Poren umfassende Beschichtung, welche einen guten Haftverbund zum Substrat aufweist.

e. Abkühlen des Substrats auf Raumtemperatur.

Gemäß einer vorteilhaften Ausführungsform wird die Beschichtung lateral strukturiert in Form eines vorgegebenen Musters auf das Substrat, wie beispielsweise ein Glas- oder Glaskeramiksubstrat, insbesondere ein Glas- oder Glaskeramiksubstrat mit niedrigem thermischen Ausdehnungskoeffizienten, aufgebracht. Auf diese Weise ist es sehr einfach möglich, beispielsweise Kochzonen zu markieren oder Bereiche, in denen elektrooptische Anzeigegeräte wie beispielsweise Displays angebracht werden, von der Beschichtung auszunehmen. Auch können so sehr einfach Rahmen- und Musterdrucke für Kaminsichtscheiben und Backöfen realisiert werden.

Es kann weiterhin vorteilhaft sein, wenn nach dem Aufbringen der Suspension eine nicht haftende Auflage auf die Schicht aufgebracht wird und die Auflage während der Dauer der Temperungen auf der Schicht verbleibt. Auf diese Weise bleibt die Schicht gleichmäßig dick. Das Auftreten von störenden Schichtunebenheiten oder Wellungen wird vermieden. Als "nicht haftend" wird eine Auflage insbesondere dann bezeichnet, wenn die Auflage nach erfolgter Temperung im Wesentlichen rückstandsfrei von der Beschichtung abnehmbar ist.

Vorteilhaft erfolgt das Auftragen der Suspension mittels eines Druckverfahren, beispielsweise mittels Ink-Jet-Druck, Offset-Druck, Tampondruck oder Siebdruck, oder mittels Walzen, Fluten, Tauchen, Sprühen, Rakeln oder Spin-Coating

### Beispiele

Im Folgenden wird die Erfindung anhand von Beispielen näher erläutert.

In den folgenden Tabellen sind einige Zusammensetzungsbereiche beispielhafter Glasfamilien, aus welchen Glaspulver für eine Beschichtung gemäß Ausführungsformen vorteilhaft ausgewählt sind, zusammengestellt.

**Glasfamilien 1**

| Gew.-% | Glas A | Glas B | Glas C | Glas D | Glas E | Glas F | Glas G | Glas H | Glas I | Glas J |
|---|---|---|---|---|---|---|---|---|---|---|
| SiO₂ | 44-57 | 53-63 | 57-62 | 47-52 | 40-50 | 63-73 | 50-66 | 45-60 | 45-75 | 25-70 |
| Al₂O₃ | 5-25 | 15-25 | 5-8 | 2-6 | 9-15 | 0-7 | 0-20 | 6-17 | 1-10 | 0-20 |
| B₂O₃ | 0-27 | 15-22 | 18-23 | 17-21 | 10-15 | 12-29 | 0-8 | 0-10 | 10-30 | 10-30 |
| Li₂O | 0-10 | 2-7 | 2-6 | 3-5 | 0-4 | 0-6 | 0-12 | 0-7 | 0-5 | 0-7 |
| Na₂O | 0-10 | 0-1 | 0-1 | 1-5 | 1-4 | 0-8 | 7-15 | 0-7 | 0-10 | 0-20 |
| K₂O | 0-10 | 0-1 | 0-4 | 5-10 | 0-3 | 0-8 | 0-3 | 0-7 | 0-5 | 0-5 |
| CaO | 0-4 | 1-4 | 1-2 | 0-2 | 0-3 | 0-5 | 0-10 | 0-12 | 0-4 | 0-5 |
| MgO | 0-3 | 1-4 | 0-2 | 0-1 | 0-3 | 0,1-5 | 3-8 | 0-9 | 0-4 | 0-3 |
| BaO | 0-4 | 0-1 | 0-2 | 0-2 | 16-24 | 0-5 | 0-15 | 13-27 | 1-10 | 0-2,5 |
| SrO | 0-4 | 1-4 | 0,5-2 | 0-1 | 0-2 | 0-4 | 0-4 | 0-4 | 0-4 | 0-1 |
| ZnO | 0-15 | 1-4 | 0-2 | 0-3 | 8-15 | 0-15 | 0-5 | 3-17 | 0-20 | 1-35 |
| TiO₂ | 0-3 | 0-1 | 0-2 | 0-2 | 0-3 | 0-5 | 0-5 | 0-2 | 0-2 | 0-10 |
| ZrO₂ | 0-7 | 1-4 | 2-5 | 0-2 | 0-4 | 0-5 | 0-5 | 0-7 | 0-7 | 0-2,5 |
| As₂O₃ | 0-1 | 0-1 | 0-1 | 0-1 | 0-1 | 0-1 | 0-1 | 0-1 | 0-1 | 0-1 |
| Sb₂O₃ | 0-1,5 | 0-1 | 0-1 | 0-1 | 0-1,5 | 0-1 | 0-1 | 0-1 | 0-1 | 0-1 |
| F | 0-3 | 0-1 | 0-1 | 0-1 | 0-1 | 0-1 | 0-1 | 0-1 | 0-2 | 0-3 |
| Cl | 0 - 1 | 0-1 | 0-1 | 0-1 | 0-1 | 0-1 | 0-1 | 0-1 | 0-1 | 0-1 |

**Glasfamilien 2**

| Gew.-% | Glas K | Glas L | Glas M | Glas N | Glas O | Glas P | Glas Q |
|---|---|---|---|---|---|---|---|
| SiO₂ | 25-55 | 35-65 | 30-54 | 6-20 | 6-15 | 45-65 | 20-60 |
| Al₂O₃ | 3-18 | - | 0-17,5 | 0-5 | - | 0-15 | 0-10 |
| B₂O₃ | 5-25 | - | 13-28 | 20-38 | 20-28 | 5-30 | 2-25 |
| Li₂O | 0-12 | 0-6 | 3-6 | - | - | 0-10 | 0-7 |
| Na₂O | 3-18 | 0-6 | 4-10 | - | - | 0-10 | 0-5 |
| K₂O | 3-18 | 0-6 | 0-2 | - | - | 0-10 | 0-2,5 |
| CaO | 3-17 | 0-12 | 0-6 | - | - | 0-5 | 0-1 |
| MgO | 0-10 | 0-12 | 0-4 | - | - | 0-5 | 0-1 |
| BaO | 0-12 | 0-38 | - | - | - | 0-20 | - |
| SrO | - | 0-16 | 0-4 | - | - | 0-16 | - |
| ZnO | - | 17,5-38 | 3-13 | 35-70 | 58-70 | 0-35 | 0-15 |
| TiO₂ | 0-5 | - | 0-2 | 0-5 | - | 0-5 | 0-5 |
| ZrO₂ | 0-3 | - | 0-2 | 0-5 | - | 0-5 | 0-2,5 |
| Bi₂O₃ | - | - | - | 0-20 | - | 0-20 | 10-75 |
| CoO | - | - | - | 0-5 | - | - | - |
| Fe₂O₃ | - | - | - | 0-5 | - | - | - |
| MnO | - | - | - | 0-10 | 0,5-1 | - | - |
| CeO₂ | - | - | - | - | 0-3 | - | |
| F | - | - | 0-3,3 | 0-6 | - | - | |

In der folgenden Tabelle sind charakteristische Temperaturen für vier Versuchsgläser angegeben, wobei bei den Gläsern 1 und 2 die Beschichtung vorteilhaft in einem sogenannten Primäreinbrand erfolgen kann, d.h. in einem Brand, welcher bei einer thermischen Behandlung eines sogenannten Grünglases, welches durch die thermische Behandlung keramisiert, d.h. in eine Glaskeramik überführt wird. Bei den Gläsern 3 und 4 erfolgt der Einbrand vorteilhaft in einem sogenannten Sekundärbrand, also in einem separaten Temperschritt, welcher unabhängig von etwaigen Temperaturbehandlung eines Substrats erfolgt.

**Tab: Versuchsgläser**

| | | Primäreinbrand | | Sekundäreinbrand | |
|---|---|---|---|---|---|
| Glas ID | | Glas 1 | Glas 2 | Glas 3 | Glas 4 |
| Glasfamilie | | A | B | P | P |
| Tg (oberer Kühlpunkt) (log 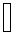 ) | 13 | 578 | 675 | 477 | 468 |
| EW (log 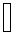 ) | 7,6 | 755 | 939 | 697 | 604 |
| VA (log 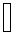 ) | 4 | 1064 | | 863 | 840 |

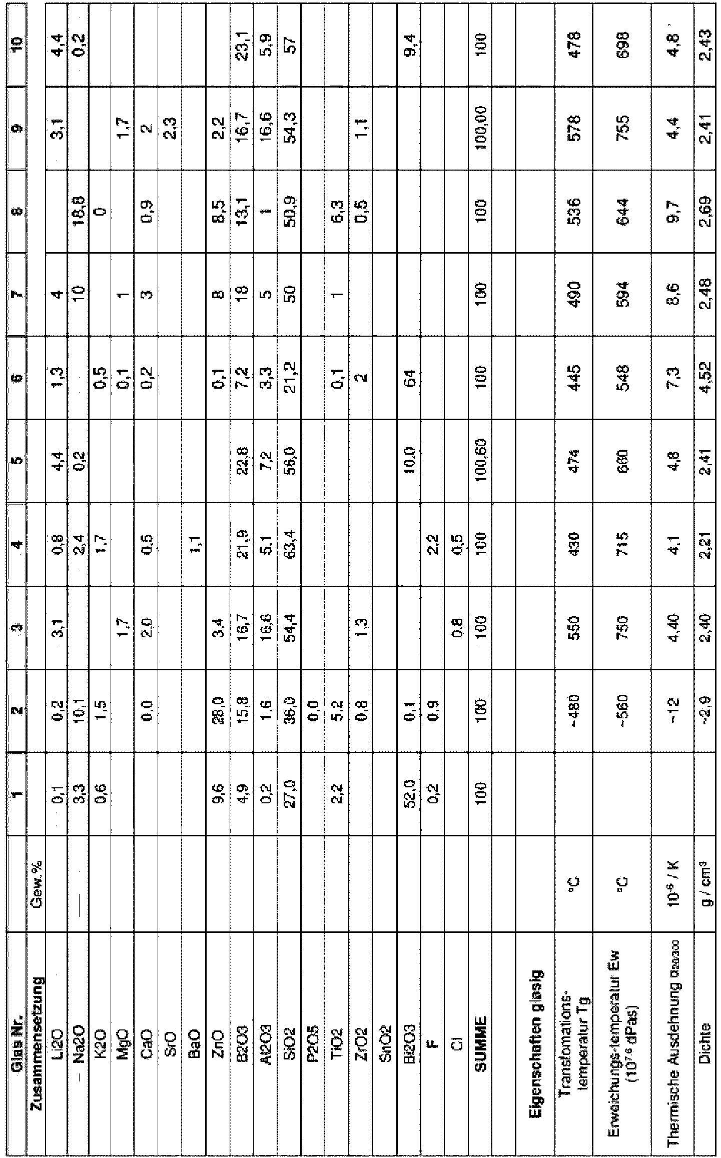

Die in der vorstehenden Tabelle aufgeführten Glaspulver haben sich hierbei als besonders vorteilhaft in Hinblick auf die Verarbeitbarkeit während des Beschichtens eines KNG- oder Borosilikatglas- oder eines Alumosilikatglas- Substrats als auch in Hinblick auf die optischen, mechanischen und chemischen Eigenschaften der entsprechenden Beschichtung herausgestellt.

Bei "EW" handelt es sich um die sogenannte Erweichungstemperatur, bei VA um die Verarbeitungstemperatur. In der zweiten Spalte sind die Werte des dekadischen Logarithmus der Viskosität (in dPas) angegeben. Die Temperaturen sind jeweils in °C angegeben.

In der nachfolgenden Tabelle sind verschiedene Beschichtungen auf einem glaskeramischen Substrat hinsichtlich ihrer Eigenschaften charakterisiert.

| Nr. | Glas ID | Blähmittel (Vol%) | Pigment (Vol%) | Sieb | Einbrand-Temperatur (°C) | Kugelfall-wert | Bemerkungen | Tesa-Test |
|---|---|---|---|---|---|---|---|---|
| 0 | Glas 3 | keins | 15% EISENCOBALTCHROMITSCHWARZSPINELL (D50 ~ 0,5-2µM) | 77 | 720 | nicht bestanden | Leicht transparent; porös | chipt |
| 1 | Glas 3 | 15% CaCO₃ | 15% EISENCOBALTCHROMITSCHWARZSPINELL (D50 ~ 0,5-2µM) | 77 | 700 | bestanden | Blickdicht, porös | 10% |
| 2 | Glas 3 | 15% CaCO₃ | 15% EISENCOBALTCHROMITSCHWARZSPINELL (D50 ~ 0,5-2µM) | 77 | 720 | bestanden | Blickdicht, porös | 95% |
| 3 | Glas 3 | 30% CaCO₃ | 15% EISENCOBALTCHROMITSCHWARZSPINELL (D50 ~ 0,5-2µM) | 77 | 740 | bestanden | Blickdicht, porös | Ok |
| 4 | Glas 3 | 30% CaCO₃ | 15% Chrom-Eisen-Nickel Schwarz-Spinell d50∼1-2,5µmChrom-Eisen-Nickel Schwarz-Spinell d50∼1-2,5µm | 77 | 740 | bestanden | Leicht transparent, porös | Ok |
| 5 | Glas 3 | 15% Na₂HPO₄.2H₂0 | 15% CoFe₂O₄ (nano) | 77 | 720 | bestanden | Leicht transparent, H₂O-resistent | ok |
| 6 | Glas 3 | 15% Na₂HPO₄.2H₂0 | 15% Chrom-Eisen-Nickel Schwarz-Spinell d50∼1-2,5µmChrom-Eisen-Nickel Schwarz-Spinell d50∼1-2,5µm | 100 | 750 | bestanden | Nahezu blickdicht, H₂O-resistent | Ok |
| 7 | Glas 4 | 15% Na₂HPO₄.2H₂0 | 15% Chrom-Eisen-Nickel Schwarz-Spinell d50∼1-2,5µm | 77 | 720 | nicht bestanden | Blickdicht, H₂O-resistent | Ok |
| | | | Chrom-Eisen-Nickel Schwarz-Spinell d50-1-2,5µm (fein) | | | | | |
| 8 | Glas 4 | 15% Na₂HPO₄.2H₂0 | 15% EISENCOBALTCHROMITSCHWARZSPINELL (D50 ~ 0,5-2µM) | 77 | 660 | nicht bestanden | Blickdicht, H₂O-resistent | Ok |
| 9 | Glas 4 | 20% Na₂HPO₄.2H₂0 | 15% EISENCOBALTCHROMITSCHWARZSPINELL (D50 ~ 0,5-2µM) | 77 | 680 | bestanden | Nahezu blickdicht, H₂O-resistent | Ok |
| 10 | Glas 4 | 20% Na₂HPO₄.2H₂0 | 15% Chrom-Eisen-Nickel Schwarz-Spinell d50∼1-2,5µm | 77 | 680 | bestanden | Blickdicht, H₂O-resistent | Ok |
| | | | Chrom-Eisen-Nickel Schwarz-Spinell d50-1-2,5µm (fein) | | | | | |
| 11 | Glas 4 | 20%Na₂HPO₄ | 15% EISENCOBALTCHROMITSCHWARZSPINELL (D50 ~ 0,5-2µM) | 77 | 720 | nicht bestanden | Blickdicht, H₂O-resistent | Ok |
| 12 | Glas 4 | 20% NaPO3 | 15% Chrom-Eisen-Nickel Schwarz-Spinell d50∼1-2,5µm | 77 | 740 | nicht bestanden | Nahezu blickdicht, H₂O-resistent | Ok |
| | | | Chrom-Eisen-Nickel Schwarz-Spinell d50-1-2,5µm | | | | | |
| 13 | Glas 4 | 15% Reisstärke | 15% EISENCOBALTCHROMITSCHWARZSPINELL (D50 ~ 0,5-2µM) | 77 | 740 | nicht bestanden | Blickdicht, H₂O-resistent | Ok |
| 14 | Glas 4 | 15% Monosaccharid | 15% EISENCOBALTCHROMITSCHWARZSPINELL (D50 ~ 0,5-2µM) | 77 | 740 | nicht bestanden | Blickdicht, H₂O-resistent | Ok |
| 15 | Glas 4 | 15% KNO₃ | 15% EISENCOBALTCHROMITSCHWARZSPINELL (D50 ~ 0,5-2µM) | 77 | 740 | nicht bestanden | Blickdicht, H₂O-resistent | Ok |
| 16 | Glas 4 | 25% Mowital | 15% EISENCOBALTCHROMITSCHWARZSPINELL (D50 ~ 0,5-2µM) | 77 | 740 | nicht bestanden | Blickdicht, H₂O-resistent | Ok |

Die angegebenen prozentualen Werte für das Blähmittel sowie das Pigment beziehen sich auf Vol.-% des Gesamtfeststoffgehalts. Angegeben ist weiterhin die Einbrandtemperatur. Die Schichten wurden im Siebdruck mittels eines Siebs mit einem 77er Gewebe, also mit einem Gewebe mit 77 Fäden auf 1 cm, erhalten.

Als "wasserresistent" oder H₂O-resistent wird eine Beschichtung bezeichnet, wenn kein Wasserdampf durch die Schicht dringt. Dies ist insbesondere für Vollflächenbeschichtungen wichtig, da diese Beschichtungen häufig in Form einer Unter- bzw. Rückseitenbeschichtung zur Ofeninnenseite gewendet sind, also im bestimmungsgemäßen Gebrauch auf der vom Benutzer abgewandten Seite des Glas- oder Glaskeramiksubstrats angeordnet ist. In diesem Fall soll von oben kein Kondenswasser oder kein Schatten von Kondenswasser nach oben hin sichtbar sein.

Für den Fall der Ausbildung der Schicht als eine Unter- oder Rückseitenbeschichtung, also eine Beschichtung, welche auf der Seite des Glas- oder Glaskeramiksubstrats angeordnet ist, welche im bestimmungsgemäßen Gebrauch vom Benutzer abgewendet ist, wie beispielsweise eine Rückseitenbeschichtung einer Kamin- oder Ofensichtscheibe, beispielsweise bei einer Backofentür, kann es von Bedeutung sein, dass die vom Benutzer aus gesehen hinter dem Substrat liegenden Bereiche bei Betrachtung nicht sichtbar ist. Eine solche Rückseitenbeschichtung sollte also vorteilhaft möglichst blickdicht sein, oder zumindest sollte die Möglichkeit bestehen, eine solche Rückseitenbeschichtung auch blickdicht aufzubringen. Überprüft wird dies in einer visuellen Begutachtung, bei welcher unter dem Glas- oder Glaskeramiksubstrat angeordnete Objekte zum Substrat ca. 12 cm Abstand aufweisen. Überprüft wird in dieser visuellen Begutachtung, ob die Objekte von oben sichtbar sind. Dabei werden die zur Durchführung einer Sichtprüfung oben genannten technischen Regeln berücksichtigt, wobei die Regeln zur direkten, örtlichen Sichtprüfung bevorzugt sind.

Leicht transparent bedeutet, dass mit etwas Licht darunterliegende Objekte leicht sichtbar erscheinen. Als blickdicht wird eine Beschichtung dann bezeichnet, wenn in diesen Test nichts sichtbar ist. Als blickdicht oder im Wesentlichen undurchlässig ist die Beschichtung insbesondere dann, wenn τᵥᵢₛ (in-line Transmission) im Wellenlängenbereich des Sichtbaren Lichts (~380 bis < = 700nm) einen Wert von weniger als 10% annimmt.

Zudem kann die Opazität bzw. Optische Dichte mit einem Durchlichtdensiometer (X-Rite 361 TX) bestimmt werden. Ab einem Wert von zumindest 2,5 ist die Scheibe als Blicklicht zu bezeichnen, d.h. in der oben erwähnten Nomenklatur, dass nach visueller Betrachtung keine Objekte sichtbar sind.

Weiterhin ist der Wert des Kugelfalltests aufgeführt. Es handelt sich hierbei um einen Test zur Bestimmung der mechanischen Festigkeit. Dafür wurden mindestens 5 Proben, welche laterale Abmessungen von 10*10 cm² sowie eine Dicke von etwa 4 mm aufwiesen, mit der Beschichtung entsprechend der Ausführungsbeispiele versehen. Die Proben wurden sodann auf einen gummibelegten Auflagerahmen aufgelegt, wobei sichergestellt wurde, dass die Gummiauflage frei war von Glassplittern oder ähnlichen potentiell das Glas bzw. die Glaskeramik schädigenden Partikeln sowie weiterhin die Probe nicht am Rahmen eingeklemmt vorlag. Sodann wird in einem Fallgestellt eine Stahlkugel mit einem Durchmesse von 36 mm sowie einer Masse von 200 g beginnend mit einer Fallhöhe von 5 cm im freien Fall auf die Oberfläche fallen gelassen. Die Fallhöhe ist dabei am Fallgestellt ablesbar und wird gemessen zwischen der Unterseite der Stahlkugel und der Oberseite der Probe. Die Fallhöhe wird sodann um jeweils 5 cm erhöht, bis es zum Bruch der Probe kommt. Notiert wird jeweils die letzte bestandene Fallhöhe. Die Festigkeit gilt als ausreichend, wenn der Mittelwert der letzten bestandenen Fallhöhe mehr als 12,5 cm beträgt.

Die Haftung der Schicht wurde mittels Tesatest bestimmt. Hierfür wird ein Streifen Tesa auf die Schicht gebracht und fest angedrückt. Anschließend wird der Tesastreifen abgezogen. Der Test gilt als bestanden, wenn keine Ablösung erfolgt.

Für die Gläser 1 und 2 finden sich entsprechende Beispiele in der nachfolgenden Tabelle.

| Nr. | Glas ID | Blähmittel (Vol%) | Pigment (Vol%) | Sieb | EinbrandTemperatur (°C) | Kugelfallwert | Bemerkungen | Tesa-Test |
|---|---|---|---|---|---|---|---|---|
| 17 | Glas 1 | keins | 15%Chrom-Eisen-Nickel Schwarz-Spinell d50∼1-2,5µm | 77 | 750 | nicht bestanden | Leicht transparent; porös | ok |
| | | | Chrom-Eisen-Nickel Schwarz-Spinell d50-1-2,5µm | | | | | |
| 18 | Glas 1 | 5% CaCO₃ | 15% Chrom-Eisen-Nickel Schwarz-Spinell d50∼1-2,5µm | 77 | 735 | nicht bestanden | Blickdicht, , H₂O-resistent | Ok |
| | | | Chrom-Eisen-Nickel Schwarz-Spinell d50-1-2,5µm | | | | | |
| 19 | Glas 1 | 5% CaCO₃ | 15% Chrom-Eisen-Nickel Schwarz-Spinell d50∼1-2,5µm | 140 | 735 | nicht bestanden | Blickdicht, , H₂O-resistent | Ok |
| | | | Chrom-Eisen-Nickel Schwarz-Spinell d50-1-2,5µm | | | | | |
| 20 | Glas 1 | 10% CaCO₃ | 15% Chrom-Eisen-Nickel Schwarz-Spinell d50∼1-2,5µm | 77 | 735 | nicht bestanden | Blickdicht, leicht porös | Ok |
| | | | Chrom-Eisen-Nickel Schwarz-Spinell d50-1-2,5µm | | | | | |
| 21 | Glas 1 | 10% CaCO₃ | 15% Chrom-Eisen-Nickel Schwarz-Spinell d50∼1-2,5µm | 140 | 735 | nicht bestanden | Blickdicht, leicht porös | Ok |
| | | | Chrom-Eisen-Nickel Schwarz-Spinell d50-1-2,5µm | | | | | |
| 22 | Glas 1 | 5% CaCO₃ | 15% Chrom-Eisen-Nickel Schwarz-Spinell d50∼1-2,5µm | 54 | 920 | bestanden | Blickdicht, leicht porös | Ok |
| | | | Chrom-Eisen-Nickel Schwarz-Spinell d50-1-2,5µm | | | | | |
| 23 | Glas 2 | 10% CaCO₃ | 15% Chrom-Eisen-Nickel Schwarz-Spinell d50∼1-2,5µm | 54 | 920 | bestanden | Blickdicht, leicht porös | Ok |
| 24 | Glas 2 | 15% Na₂HPO₄.2H₂0 | 15% CoFe₂O4 (nano) | 77 | 800 | bestanden | Nahezu blickdicht, H₂O-resistent | ok |
| 25 | Glas 2 | 15% Na₂HPO₄.2H₂0 | 15% Chrom-Eisen-Nickel Schwarz-Spinell d50∼1-2,5µm | 100 | 820 | bestanden | Nahezu blickdicht, leicht porös | Ok |
| 26 | Glas 2 | 15% Na₂HPO₄.2H₂0 | 15% EISENCOBALTCHROMITSCHWARZSPINELL (D50 ~ 0,5-2µM) | 77 | 800 | Nicht bestanden | Nahezu blickdicht, H₂O - resistent | Ok |
| 27 | Glas 2 | 20% Na₂HPO₄.2H₂0 | 15% EISENCOBALTCHROMITSCHWARZSPINELL (D50 ~ 0,5-2µM) | 77 | 800 | bestanden | Blickdicht, leicht porös | Ok |
| 28 | Glas 2 | 20% Na₂HPO₄.2H₂0 | 15% Chrom-Eisen-Nickel Schwarz-Spinell d50∼1-2,5µm (fein) | 77 | 800 | bestanden | Blickdicht, leicht porös | Ok |
| 29 | Glas 2 | 20%Na₂HPO₄ | 15% EISENCOBALTCHROMITSCHWARZSPINELL (D50 ~ 0,5-2µM) | 77 | 820 | bestanden | Blickdicht, H₂O-resistent | Ok |
| 30 | Glas 2 | 20% NaPO3 | 15% Chrom-Eisen-Nickel Schwarz-Spinell d50∼1-2,5µm | 77 | 850 | bestanden | Nahezu blickdicht, H₂O-resistent | Ok |
| 31 | Glas 2 | 15% Reisstärke | 15% EISENCOBALTCHROMITSCHWARZSPINELL (D50 ~ 0,5-2µM) | 54 | 900 | bestanden | Blickdicht, H₂O-resistent | Ok |
| 32 | Glas 2 | 15% Monosaccharid | 15% EISENCOBALTCHROMITSCHWARZSPINELL (D50 ~ 0,5-2µM) | 77 | 875 | bestanden | Blickdicht, H₂O-resistent | Ok |
| 33 | Glas 2 | 15% KNO₃ | 15% EISENCOBALTCHROMITSCHWARZSPINELL (D50 ~ 0,5-2µM) | 54 | 800 | bestanden | Blickdicht, H₂O-resistent | Ok |
| 34 | Glas 2 | 25% Mowital | 15% EISENCOBALTCHROMITSCHWARZSPINELL (D50 ~ 0,5-2µM) | 77 | 850 | bestanden | Blickdicht, H₂O-resistent | Ok |

Die Schichtdicke wird wesentlich durch die Art des Auftrags mitbestimmt. Beispielsweise hängt beim Siebdruck die resultierende Schichtdicke von der Fadenzahl sowie dem Anpastverhältnis (APV) ab. Der Einfluss der Fadenzahl für Beschichtungen gemäß Ausführungsformen findet sich in der folgenden Tabelle. Hier wurde für ein bestimmtes Beschichtungssystem außerdem auch der Einfluss des Gehalts an Blähmittel untersucht. Die Schichtdicken sind jeweils in µm angegeben. Bei einem geringeren APV (z.B. 10:3) erhöhen sich bei gleicher Siebstärke entsprechend die Schichtdicken um bis zu das 3-fache.

| Siebstärke (APV 10:12) | Schichtdicke nach Schäumung bei 5 Vol% Blähmittel (µm) | Schichtdicke nach Schäumung bei 10 Vol % Blähmittel (µm) |
|---|---|---|
| 77er Sieb: | 5-6,2 | 4,8-6,9 |
| 100er Sieb | ~4 | ~4,5 |
| 140er Sieb | 1,7-2,3 | ~3,4 |

Auch beim Autrag der Schicht mittels Rakel kann die resultierende Schichtdicke variiert werden. Werte finden sich hier in der folgenden Tabelle.

| Einstellung Rakel-Spaltweite | Nach Schäumung (µm) |
|---|---|
| 30 µm | ~ 15 - 30 |
| 100 µm | ~ 40 - 55 |
| 250 µm | ~ 100-150 |
| 500 µm | ~ 130 - 250 |

Für einen ersten Ansatz einer Suspension findet sich die Zusammensetzung in der folgenden Tabelle.

| S-0001 | Feststoff | Lösungsmittel | Dispergier-mittel | Binder | Weichmacher |
|---|---|---|---|---|---|
| Dichte (g/cm³) | 2,58 | | 1,2 | 1,1 | 1,073 |
| Vol% | 30,0 | 57,4 | 0,4 | 7,0 | 6,0 |
| Gew% | 56,1 | 33,9 | 0,3 | 5,5 | 4,2 |

In der mit "Dichte" benannten Zeile sind dabei die Dichten der jeweiligen Bestandteile aufgeführt. Die Prozentangaben beziehen sich jeweils auf die gesamte Suspension.

Eine zweite beispielhafte Suspension ist in der folgenden Tabelle aufgeführt.

| S-0002 | Feststoff | Lösungsmittel | Dispergier-mittel | Binder | Weichmacher |
|---|---|---|---|---|---|
| Dichte (g/cm³) | 2,58 | | 1,2 | 1,1 | 1,073 |
| Vol% | 45 | 31 | 5 | 10 | 9 |
| Gew% | 70 | 15,2 | 3,0 | 6,5 | 5,2 |

Die beiden vorstehend aufgeführten Suspensionen eigenen sich besonders vorteilhaft für ein Aufbringen mittels Rakeltechnik.

Das Rakeln ist eine Abstreiftechnik. Zunächst wird im Überschuss Lack auf die Substratoberfläche gegeben, anschließend wird mit einem Rakel, der einen definierten Rakelspalt definiert, der Beschichtungsstoff verteilt und der Überschuss entfernt. Mit der Wahl des Rakelspalts wird die Schichtdecke des Nassfilms beeinflusst. So können mit dem Rakelverfahren große, ebene Flächen beschichtet werden. Die Beschichtungsdicke ist beim Rakeln nur durch die kritische Filmdicke des Lacksystems begrenzt. Das Rakelverfahren wird charakterisiert durch:
- Schichtdicken von 4 µm bis zur kritischen Filmdicke möglich
- Nur für ebene Oberflächen geeignet
- Gut automatisierbar (große Stückzahlen möglich)
- Nur vollständige Benetzung der Oberfläche möglich

Das Rakelverfahren umfasst hierbei die folgenden Schritte.

Herstellen einer Suspension aus Glas, Blähmittel und Lösungsmittel (beispielsweise umfassend H₂O destilliert), dazu:
1) Mahlen Glas auf Korngröße d₅₀ ~ 1-10µm
2) Mischen Glaspulver mit Blähmittel (Anteil Blähmittel 0,5 Vol-% bis 40 Vol.-%, bevorzugt 5 Vol.-% bis 30 Vol.-%, besonders bevorzugt 15 - 25 Vol.-%) und Lösungsmittel sowie Tensiden, Dispergiermittel, Bindemittel, Plastifizierungsmittel und Flockungsmittel zur Erzielung einer Suspension mit einer Viskosität zwischen 2000 mPas bis 8000 mPas, bevorzugt 2500 mPas bis 7000 mPas, besonders bevorzugt 3000 mPas bis 6000 mPas und einem Feststoffgehalt von 15 Vol.-% bis 50 Vol.-%, bevorzugt 20 Vol.-% bis 40 Vol.-%, besonders bevorzugt von ungefähr 35 Vol.-%. Dabei kann die Zugabe der Dispergiermittel, Bindemittel, Plastifizierungsmittel etc. je nach Hersteller und Chemie zwischen 0,25 und 25 Gew.-% bezogen auf den Feststoffgehalt variieren.
   a) LÖSUNGSMITTEL umfassen hierbei Wasser, organische Lösungsmittel (meist Methyethyl-aceton, Trichlorethylen, Acetone, Alkohole, flüssige Wachse, raffiniertes Erdöl, Polymere (z.B. PVB, PVA) und Mischungen davon) und dienen dazu, Partikel in Lösung zu bringen bzw. aufzuschlämmen.
   b) Mittels TENSIDEN (diese umfassen polare und nicht-polare Tenside, ionische Tenside und nicht-ionische Tenside, wie beispielsweise ethoxyliertes Nonylphenol oder ethoxylierter Tridecylalkohol, Natriumstearat oder Natriumdiisopropylnaphtalensulfat, und Dodecyltrimethylammoniumchlorid) kann die Benetzung der Partikel mit dem Lösungsmittel verbessert werden.
   c) Mit VERFLÜSSIGERN/DISPERGIERMITTELN wird Agglomeration durch elektrostatische Abstoßung (wasserbasiertes [wässriges] Milieu) oder durch sterische Abstoßung vermieden. Anorganische Dispergiermittel im wasserbasierten Milieu basieren beispielsweise auf Natriumcarbonat, Natriumsilikat, Natriumborat und Tetranatriumpyrophosphat. Organische Dispergiermittel sind vorzugsweise Natriumpolyacrylat, Ammoniumpolyacrylat, Natriumzitrat, Natriumsuccinat, Natriumtartrat, Natriumpolysulfonat oder Ammoniumzitrat.

Andere, vorzugsweise im Bereich der technischen Keramik eingesetzten Verflüssigungs- und Dispergiermittel basieren beispielsweise auf alkalifreien Polyelektrolyten, Carbonsäureestern sowie Alkanolaminen. Beispiele für starke Polyelektrolyte sind Natrium-Polystyrolsulfonat (anionisch) oder Poly-Diallyldimethyl-Ammoniumchlorid (kationisch), Vertreter der schwachen Polyelektrolyte sind Polyacrylsäure (sauer) oder Polyethylenimin (basisch). Die Eigenschaften einer Polyelektrolytlösung werden größtenteils von den abstoßenden Wechselwirkungen der gleichgeladenen Gruppen an der Polymerkette bestimmt.

Weitere Beispiele für Dispergatoren sind H₂O, ROH, C₇H₈ (Toluol), C₂HCl₃ (Trichlorethylen), welche die Agglomeration oder Flokkulation der Pulverteilchen durch Wechselwirkung mit Pulveroberfläche verhindern.

Weiterhin eignen sich hierfür beispielsweise Darvan^{®}, Dolapix^{®}, Polyarylsäuren, Ammoniumoxalat (als Monohydrat), Oxalsäure, Sorbit- Ammoniumcitrat oder andere.

d) BINDEMITTEL/FLOCKUNGSMITTEL werden eingesetzt, um die Viskosität zu erhöhen oder die Absetzung der Partikel zu verzögern. Zudem kann durch die Bindemittel die mechanische Festigkeit des Grünkörpers erhöht werden (von Vorteil für Spritzguss-, Druckgusstechniken). Es gibt kolloidale Bindemittel (vorwiegend im Bereich der traditionellen Keramik eingesetzt) und molekulare Bindemittel (Polymere: ionische, kationische und anionische). Als Beispiele für synthetische Bindemittel sind genannt: Polyvinylalkohol (PVA), Polyvinylbutyral (PVB), Polyvinylmetacrylat (PMA), und Polyacetale. Beispiele für Bindemittel auf pflanzlicher Basis sind Zellstoff, Wachse, Öle oder Paraffin.

e) PLASTIFIZIERUNGSMITTEL dienen dazu, die Transformationstemperatur eines PolymerBindemittels auf Temperaturen unterhalb der Umgebungstemperatur einzustellen. Beispiele hierfür sind Restwasser, PVB, PMMA, leichte Glykole (Polyethylenglycol (PEG), Glycerol), Phthalate (Dibutylphtalat, DBP, Benzylphthalat, BBP) und andere.

3) Aufbringen auf Glaskeramik via Rakeltechnik auf das Substrat, beispielsweise eine Glaskeramik-Platte.

4) Trocknen der aufgebrachten Schicht bei 100-300°C

5) Schäumen und Einbrand bei 550-900°C, vorzugsweise 600-900°C

Ein weiteres Beispiel für eine Beschichtung mittels Rakelverfahren ist im Folgenden dargestellt:
Herstellung einer Suspension aus Glas, Blähmittel und Lösungsmittel (H₂O destilliert), dazu:
1) Mahlen Glas auf Korngröße d50 ∼ 1-10µm
2) mischen Glaspulver mit Blähmittel (Anteil Blähmittel 0,5 Vol.-% bis 40 Vol.-%, bevorzugt 5 Vol.-% bis 30 Vol.-%, besonders bevorzugt 15 Vol.-% bis 25 Vol.-%)
3) Ansetzen der Suspension; hierzu Deagglomeration der Pulver durch Lösemittel und Dispergator; Zugabe von Binder und weitere Homogenisierung; Entgasung der Gießsuspension Dabei kann die Zugabe der Dispergiermittel, Bindemittel etc. je nach Hersteller und Chemie zwischen 0,25 und 25 Gew.-% bezogen auf den Feststoffgehalt variieren.

Die Aufbereitung der Gießsuspension erfolgte in PE-Behältern (100 bzw. 250 ml Füllvolumen) unter Hinzugabe von Aluminiumoxidmahlkugeln (Mahlkugeldurchmesser ca. 3 & 5 mm) in einem Taumelmischer (Turbula, WAB AG, Basel, Schweiz). Die PE-Behälter wurden zu ca. 50 % mit Suspension gefüllt, der Mahlkugelanteil lag bei etwa 30 % des Behältervolumens. Anschließend wurde die fertige Gießsuspension mittels Stahlgewebe abgesiebt (Maschenweite 0,224 mm), um noch vorhandene Agglomerate oder nicht gelöste organische Bestandteile sowie die Mahlkugeln zu entfernen.
- Feststoffgehalt Suspension von 15 Vol.-% bis 50 Vol.-%, bevorzugt 20 Vol.-% bis 40 Vol.-%, besonders bevorzugt ungefähr 35 Vol.-%
- die Viskosität lag bei einer Scherrate von 20 s⁻¹ und einem Feststoffgehalt von 35 Vol.-% bei 2000 mPas bis 8000 mPas, bevorzugt bei 2500 mPas bis 7000 mPas, besonders bevorzugt bei 3000 mPas bis 6000 mPas
- Die Suspension weist Thixotropie auf.

In einer Ausführung kommt als temporärer Binder Mowiol (Polyvinylalkohole, Fa. Firma Kuraray) zum Einsatz. Es wird mit unterschiedlichen Molgewichten eingesetzt: Mowiol 28-99 = 145000 g/mol und Mowiol 4-88 = 131000 g/mol. Über die Kettenlänge der Mowiole kann die Viskosität der Suspension variiert werden.

Wasser werden in einem Becherglas vorgelegt und auf 90°C erhitzt. Unter stetigem Rühren im Dissolver werden Mowiol, Dispergiermittel und Plastifizierer/Bindemittel (Binder) zum Wasser zugegeben. Nachdem die Lösung 20 min gerührt wurde, wird das verdunstete Wasser wieder aufgefüllt, damit das Mischungsverhältnis konstant bleibt. Anschließend wird LAS-Glaskeramikpulver mit einem d₅₀ von - 1,8 µm sowie einem d₉₉ von -14 µm nach und nach zugegeben. Die Dispersion wird 30 min mit einem Dissolver gerührt.

Über Nacht wird der Suspension durch Drehen in einem mit zusätzlich mit ZrO₂-Kugeln (Ø = 5 mm, 10% Volumenanteil bezogen auf das Suspensionvolumen) gefüllten Behälter auf der Rollenbank weiter homogenisiert. Die ZrO₂-Kugeln werden anschließend mit einem Sieb entfernt. Die nun stark mit Blasen durchsetzte Suspension wird am Rotationsverdampfer durch Anlegen eines Drucks <50 mbar entgast.

| Gew.-% | |
|---|---|
| | Lösungsmittel |
| 1% | Rheologisches Additive |
| 1% | Bindemittel für Flüssigkeiten |
| 0,07% | Temporäres Bindemittel |
| 70% | Glasfritte + Schäumungsmittel |

Anschließend wird die so erhaltene Suspension mittels Siebdruck auf eine Glaskeramik aufgebracht. Die Schicht wird bei einer Temperatur zwischen 100°C und 300°C getrocknet. Das Schäumen und der Einbrand erfolgen bei Temperaturen zwischen mindestens 550°C, vorzugsweise mindestens 600°C und höchstens 900°C, besonders bevorzugt mindestens 650°C und höchstens 900°C.

Eine weitere Ausführungsform des Herstellungsverfahrens sieht vor, dass die in Schritt a) bereitgestellte Suspension zumindest ein IR-reflektierendes Pigment umfasst. Gemäß dieser Variante enthält die Suspension bzw. Paste weiterhin ein Glaspulver mit einer Erweichungstemperatur T_{EW,Glaspulver} sowie ein Siebdruckmedium.

Nach dem Aufbringen der Suspension auf das Glas- oder Glaskeramiksubstrat mittels Siebdruck erfolgt das Einbrennen der aufgebrachten Schicht bei Temperaturen im Bereich von T_{Einbrand} ≥ T_{EW,Glaspulver}. Es hat sich herausgestellt, dass mit dem Einbrennen der Schicht weitere Verfahrensschritte kombiniert werden können. Eine Variante sieht hierbei vor, dass die Schicht auf eine Glassubstrat, vorzugsweise ein Kalknatronglas oder ein Borosilikatglas aufgebracht wird und das Glassubstrat gemeinsam mit dem Einbrennen der Beschichtung thermisch vorgespannt wird. Vorzugsweise erfolgt hierbei der Einbrand und das thermische Vorspannen bei einer Temperatur im Bereich von 500 bis 1000°C.

In einer weiteren bevorzugten Variante des Verfahrens wird als Substrat ein kristallisierbares Grünglas bereitgestellt. Hier kann gleichzeitig mit dem Einbrand der Schicht eine Keramisierung des Substrates stattfinden. Beide oben beschriebenen Varianten sind in Hinblick auf eine Energie- und Zeitersparnis vorteilhaft.

Ein geeigneter Test zur Überprüfung der Dichtigkeit der Poren umfassen Beschichtungen wird im Folgenden beispielhaft erläutert.

Die Dichtigkeit der geschlossene Poren umfassenden Beschichtung gegenüber wässrigen und öligen Medien sowie Reinigungsmitteln wird mittels eines Tropfen-Tests definiert. Ein Tropfen der zu testenden Flüssigkeit wird auf die Beschichtung aufgebracht und mediumspezifisch unterschiedlich lange einwirken gelassen, mindestens jedoch 10 Sekunden.

Beispielhaft werden Wasser in der Regel nach 30 Sekunden, Öltropfen nach 24 Stunden und Reinigungsmitteltropfen nach einigen Minuten abgewischt. Anschließend wird das Glas- oder Glaskeramik-Substrat umfassend eine geschlossene Poren umfassende Beschichtung begutachtet. Sofern das Glas- oder Glaskeramik-Substrat als im sichtbaren Bereich des optischen Spektrums zumindest teilweise transparent ausgebildet ist, wird die Beschichtung von oben durch das Substrat hindurch begutachtet. Der Tropfen darf bzw. der Schatten des Tropfens darf bei dieser Betrachtung nicht sichtbar sein. Als Schatten des Tropfens wird hierbei eine Änderung der optischen Anmutung der Beschichtung verstanden, welche sich beispielsweise dadurch ergeben kann, dass Teile des den Tropfen bildenden Fluids in die Beschichtung migrieren und es so beispielsweise zu einer Änderung des Brechungsindex der Beschichtung kommt.

Die Begutachtung der Beschichtung kann dabei visuell, beispielsweise durch Betrachtung unter einer bestimmten Beleuchtung, beispielsweise in einer Lichtkabine, in welcher bestimmte Normlichtarten eingestellt werden können, und welche beispielsweise bei der Nuancierung von Farbmischungen verwendet werden, erfolgen.

Vorzugsweise erfolgt die Begutachtung der Beschichtung gemäß der vorstehend genannten Normen, Regeln und Schritte zur Sichtprüfung, um die Wasserdichtigkeit bzw. die Feuchtedichtigkeit der Beschichtung festzustellen.

Im vorliegendem Fall erfolgte die Prüfung mit Sidolin als Testflüssigkeit. Als sehr gut wird im vorliegenden Fall eine Schicht beschrieben, welche nach dem Test weder auf der Vorder- noch auf der Rückseite eine Farbänderung zeigt. Als gut wird im vorliegenden Fall eine Schicht beschrieben, welche nach dem Test auf der Vorderseite keine Farbänderung zeigt und auf der Rückseite einen abwischbaren Rand zeigt.

Bei einer solchen Betrachtung können in der Regel bestimmte Änderungen des Farbeindrucks und/oder des sonstigen optischen Eindrucks, beispielsweise bei der Veränderung eines metallischen Effekts, entdeckt werden. Auch möglich ist eine Bewertung durch eine Farbortmessung vor und nach dem Aufbringen des Tropfens, wobei mögliche Veränderungen des Farborts dann durch Vergleich der Messwerte bestimmt werden können. Bei Einsatz von Effektpigmenten kann die Farbortbestimmung vor und nach dem Einwirken des fluiden Mediums auch unter winkelabhängiger Farbortmessung erfolgen.

Ein nochmals weiterer Aspekt der vorliegenden Offenbarung betrifft die Verwendung eines Glas- oder Glaskeramiksubstrats nach der vorliegenden Offenbarung mit einer Beschichtung umfassend geschlossene Poren nach der vorliegenden Offenbarung, wobei die Beschichtung als Barriere gegenüber dem Ein- und Durchtritt von Fluiden ausgebildet ist und eine Barrierewirkung entfaltet, wobei die Beschichtung vorzugsweise ein IR-reflektierendes Farbpigment umfasst, als Sichtscheibe in einem Ofen oder einem Kamin, insbesondere als Sichtscheibe für einen Backofen oder als Kaminsichtscheibe.

### Beschreibung der Zeichnungen

Es zeigen
- Fig. 1 bis 3: schematische und nicht maßstabsgetreue Darstellung eines Glas- oder Glaskeramik-Substrats mit einer Beschichtung umfassend geschlossene Poren,
- Fig. 4a bis 4d, 5, 6a bis 6d: fotographische Darstellungen von Beschichtungen umfassend geschlossene Poren,
- Fig. 7: Transmissionskurven eines unbeschichteten sowie verschiedener beschichteter Glas- oder Glaskeramiksubstrate,
- Fig. 8: Ergebnisse von Festigkeitsuntersuchungen an verschieden beschichteten Substraten,
- Fig. 9: eine scheamtische Darstellungen des Aufbaus einer Backofentür,
- Fig. 10: eine schematische Darstellung des Meßaufbaus zur Ermittlung der Oberflächentemperatur der äußeren Backofenscheibe,
- Fig. 11: eine graphische Darstellung des gemessen Temperaturverlaufs der maximalen Temperatur der äußeren Backofenscheibe verschiedener Ausführungsbeispiele, die sich hinsichtlich der Porosität der Beschichtung unterscheiden bei einer Betriebstemperatur des Ofens von 450°C und
- Fig. 12: eine Darstellung der gemittelten Werte der in Fig. 11 gezeigten Temperaturverläufe.

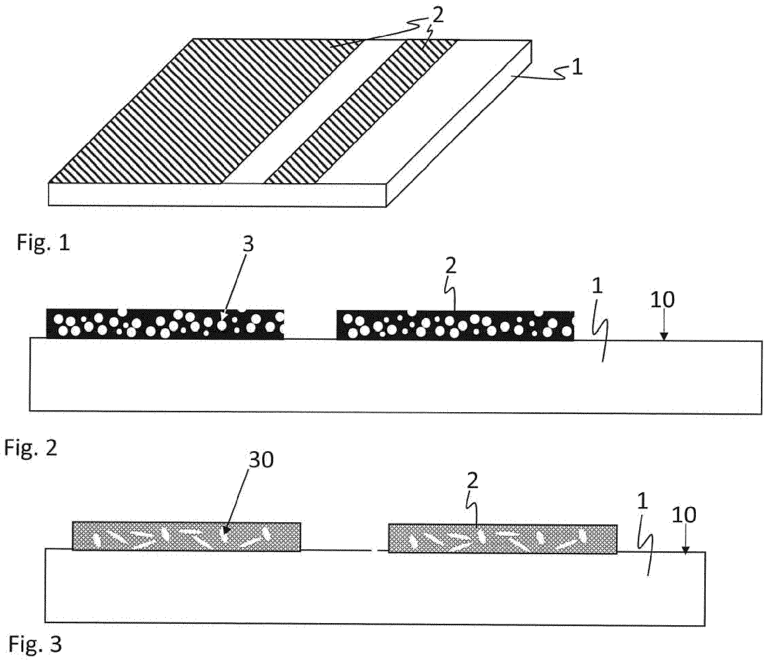

Fig. 1 zeigt in schematischer und nicht maßstabsgetreuer Darstellung ein Glas- oder Glaskeramik-Substrat 1 mit einer Beschichtung 2 umfassend geschlossene Poren. Die Beschichtung ist als Barriere gegenüber dem Durchtritt von Fluiden ausgebildet.

Die Beschichtung 2 kann auf das Substrat 1 vollflächig oder - wie in Fig. 1 schematisch dargestellt - auch lediglich auf einen Teil des Substrats aufgebracht werden. Insbesondere ist es möglich, die Beschichtung 2 in Form eines vorbestimmten Musters auf das Substrat 1 aufzubringen, beispielsweise, um einen Schriftzug oder ein Logo auf das Glas- oder Glaskeramik-Substrat aufzubringen.

Fig. 2 zeigt in schematischer und nicht maßstabsgetreuer Darstellung einen Schnitt durch ein Glas- oder Glaskeramik-Substrat 1. Eine Oberfläche 10, welche bevorzugt im bestimmungsgemäßen Gebrauch des Glas- oder Glaskeramik-Substrats 1 vom Bediener abgewandt ist, ist zu einem Teil mit einer Beschichtung 2 belegt. Diese Beschichtung 2 umfasst geschlossene Poren 3. Diese Poren 3 sind der Übersichtlichkeit halber nicht alle bezeichnet.

Die Poren 3 sind vorliegend schematisch als Kreise bzw. Kugelschnitte dargestellt. Es ist möglich, dass die Poren in unterschiedlichen Größen und Formen vorliegen, also allgemein, ohne Beschränkung auf das hier schematisch dargestellte Beispiel, auch nicht rund vorliegen.

Fig. 3 zeigt in schematischer und nicht maßstabsgetreuer Form einen Schnitt durch eine weiteres Ausführungsbeispiel, bei dem die Oberfläche 10 des Glas- oder Glaskeramiksubstrats 1 mit einer porösen Beschichtung 2 umfassend Poren 30 mit einer anisotropen Querschnittsform. So weisen die Poren 30 einen eliptischen Querschnitt auf. Poren mit einer entsprechenden Form können beispielsweise durch die Verwendung von Reisstärke als Blähmittel erhalten werden.

Es ist möglich, dass die Poren in unterschiedlichen Größen und Formen vorliegen, also allgemein, ohne Beschränkung auf das hier schematisch dargestellte Beispiel, auch nicht rund vorliegen.

| Porenformer | Porengrößen (um) | Porenform |
|---|---|---|
| | | |
| Na-Hydrogenphosphat | 5-30 | Rundlich |
| Reisstärke | 0,1-5 | länglich |
| Kartoffelstärke | 10-15 | Ovoid-kartoffelförmig |
| Weizenstärke | 2-10 | Kornförmig |

Auch können die in den Fig. 2 und 3 schematisch dargestellten Beschichtungen neben den geschlossenen Poren 3, 30 Poren umfassen, welche an der Grenzfläche der Schicht angeordnet sind, also in Form einer Einbuchtung der Beschichtung nach unten vorliegen. Damit die Wirkung der Beschichtung 2 als Barriere gegenüber dem Durchtritt von Fluiden gegeneben ist, stören solche einseitig offenen Poren jedoch nicht. Bedeutsam ist vielmehr, dass keine von der Oberfläche der Beschichtung 2 bis hinunter auf die Oberseite 10 des Substrat1 reichenden durchgehenden Poren vorliegen.

In den Fig. 3a und 3b werden schematisch Ausführungsformen dargestellt, bei denen die auf dem Glas 1 abgeschiedene Beschichtung 2 Poren 32 bzw. 33 aufweisen. Es handelt sich hierbei in beiden Fällen um geschlossene Poren. Fig. 3a stellt hierbei eine Ausführungsform mit weitgehend kugelförmigen Poren 32 dar. Entsprechende Poren können beispielsweise durch die Verwendung von Calciumcarbonat als Blähmittel erhalten werden. Die in Fig. 3b gezeigten Poren 33 weisen dagegen einen elliptischen Querschnitt und somit eine anisotrope Struktur auf. Poren mit einer entsprechenden Form können beispielsweise durch die Verwendung von Reisstärke als Blähmittel erhalten werden.

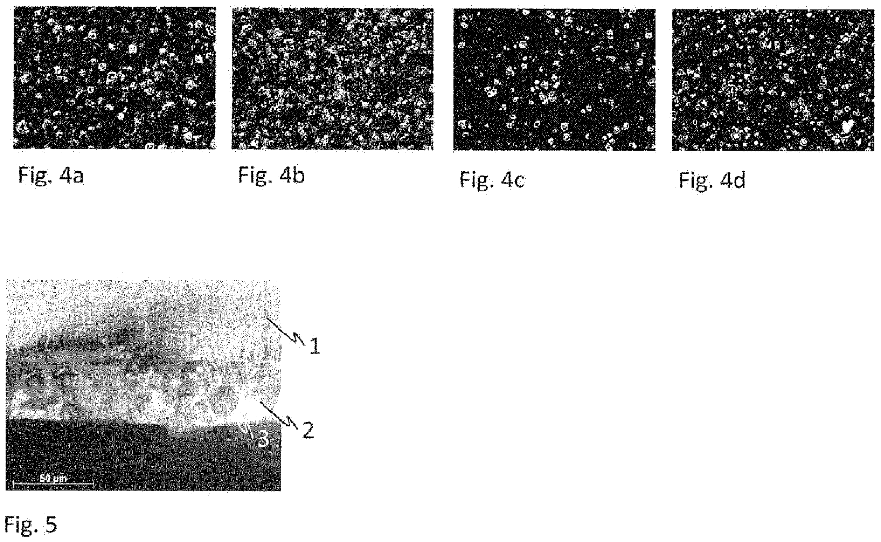

Fig. 4a - 4d zeigen verschiedene fotographische Darstellungen lichtmikroskopischer Aufnahmen von Beschichtungen 2 gemäß Ausführungsformen der Offenbarung, welche mit unterschiedlich dicken Sieben und bei unterschiedlichen Temperaturen eingebrannt sind. Die beiden im linken Bereich angeordneten Beschichtungen wurden jeweils mit einem Sieb mit 77- Gewebe aufgebracht. Bei der ganz links angeordneten Probe in Fig. 4a erfolgte der Einbrand bei ca. 750°C, bei der halblinks angeordneten Probe in Fig. 4b bei ca. 720°C. Die beiden rechts angeordneten Proben in Fig. 4c und 4d zeigen Beschichtungen, welche mit einem Sieb mit 100er Gewebe aufgedruckt wurden. Der Einbrand der halbrechts angeordneten Probe in Fig. 4c erfolgte wiederum bei ca. 750°C, der Einbrand der ganz rechts dargestellten Proben in Fig. 4d bei ca. 720°C.

Ersichtlich ist insbesondere der Einfluss der Temperatur auf die Bildung der Poren: Während bei den jeweils bei ca. 750°C eingebrannten Proben eher weniger, dafür jedoch größere Poren erhalten werden, entstehen bei den Proben, welche bei ca. 720°C eingebrannt wurden, mehr Poren, welche dafür kleinere Abmessungen aufweisen.

Fig. 5 zeigt eine fotographische Darstellung eines Schnitts durch ein Substrat 1, auf welchem eine Beschichtung 2 umfassend geschlossene Proben 3 aufgebracht wurde. Als Blähmittel wurde Natrium-Hydrogenphosphat zu 10 Vol.-% zu dem Glas 2 dazugegeben.

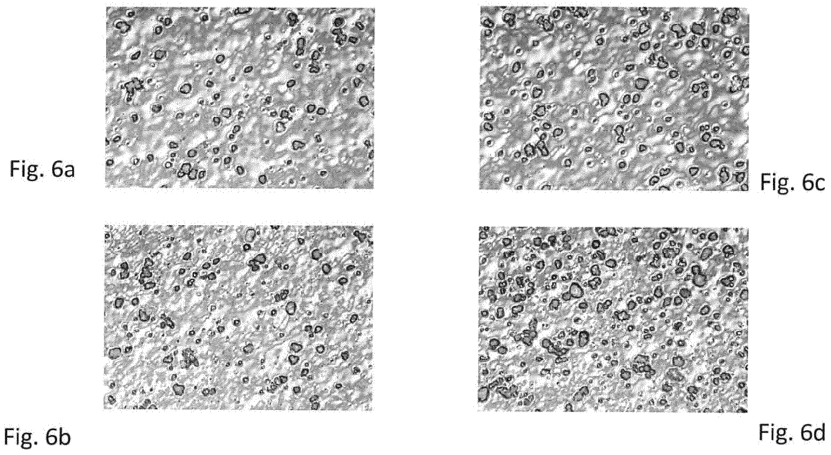

Fig. 6a bis 6d zeigen weitere Darstellungen einer Beschichtung 2 umfassend geschlossene Poren 3. Die Beschichtung wurde erhalten durch Vermischung von Glas 1 mit Calciumcarbonat. In den Proben in Fig. 6a und 6b wurde jeweils 5 Vol.-% Calcium-Carbonat zu Glas 1 dazugegeben, bei den Proben in Fig. 6c und 6d jeweils 10 Vol.-% Calcium-Carbonat. Der Einbrand erfolgte bei den Proben der Fig. 6a und 6c jeweils bei ca. 750°C, bei den Proben der Fig. 6b und 6d bei ca. 720°C. Deutlich erkennbar ist der Einfluss der Menge des Blähmittels, welcher zu einer deutlichen Erhöhung der Anzahl von Blasen führt.

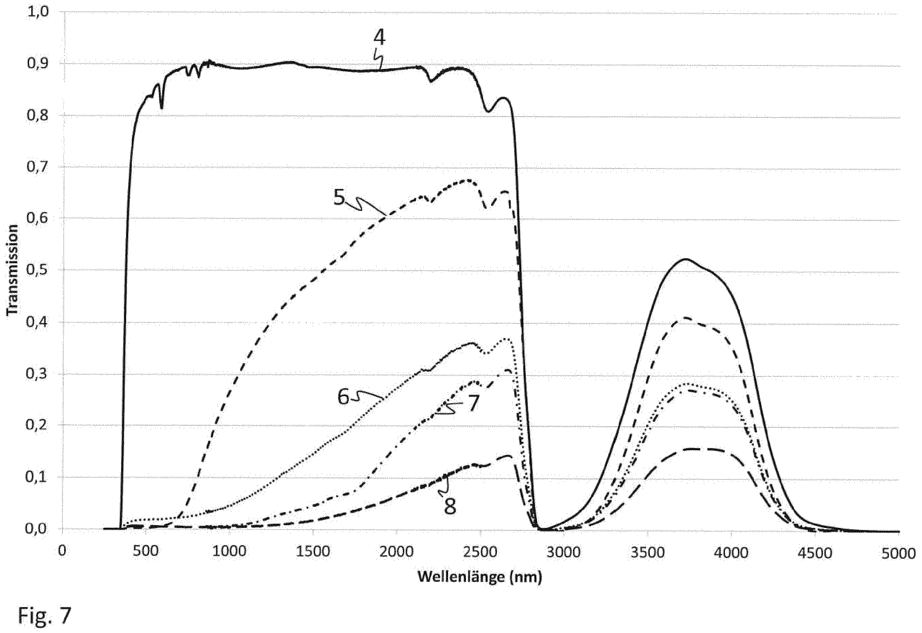

In Fig. 7 sind die Verläufe der Transmission verschiedener Glaskeramiksubstrate im Wellenlängenbereich von ca. 300 nm bis 5000 nm dargestellt. Die Kurve 4 bezeichnet den Verlauf der Transmission für ein unbeschichtetes Glaskeramiksubstrat. Im sichtbaren Spektralbereich, also von ca. 380 nm bis ca. 780 nm ist eine hohe Transmission gegeben, das Substrat ist in diesem Bereich also als transparent zu bezeichnen. Damit sind unter einem solchen Substrat befindliche Strukturen für einen Benutzer sichtbar.

Dies ändert sich, wenn eine Beschichtung gemäß Ausführungsformen der Offenbarung aufgebracht wird.

Kurve 5 zeigt hier den Fall eines Substrats, welches im unbeschichteten Zustand eine Transmission analog zu der der Kurve 4 aufweist, und bei welcher als Pigment ein Cobalt-Eisen-Spinell mit nanoskaliger Teilchengröße verwendet wurde. Blähmittel wurden hierbei nicht zugegeben. Bei Kurve 6 handelt sich um eine Beschichtung, welche neben dem nanoskaligen Cobalt-Eisen-Spinell (zu 15 Vol.-%) weiterhin 20 Vol.-% Natriumdihydrogenphosphat als Blähmittel umfasst.

Kurve 7 zeigt eine Beschichtung, welche anstelle des für die Beschichtung zu Kurve 6 verwendeten Pigments das Co/Mn/Fe/Cr Spinel Pigment (d50 - 0,5µm) bei ansonsten unveränderter Zusammensetzung umfasst. In Kurve 8 wurde bei ansonsten unveränderter Zusammensetzung als Pigment Chrom-Eisen-Nickel Schwarz-Spinell (d50 ∼ 1 - 2,5µm) verwendet.

Es zeigt sich, dass insbesondere die mit Beschichtungen gemäß Ausführungsformen der vorliegenden Offenbarung versehen Substrate Transmissionsverläufe aufweisen, bei welchen eine sehr gute Deckwirkung im Sichtbaren erzielt wird. Dies wird durch die Kurven 6 bis 8 verdeutlicht. Die Transmission des beschichten Substrates wird also durch die Poren nochmals zusätzlich herabgesetzt, und somit die Opazität erhöht. Die Opazität bezeichnet hierbei den Kehrwert der Transmission.

In der Optik ist die Extinktion oder optische Dichte E die wahrnehmungsgerecht logarithmisch formulierte Opazität O und damit ein Maß für die Abschwächung einer Strahlung (z. B. Licht) nach Durchqueren eines Mediums (Wikipedia https://de.wikipedia.org/wiki/Extinktion_(Optik)).

Es handelt sich hierbei jeweils um die Darstellung der in-line-Transmission (im Gegensatz zur totalen Transmission). Bei der Messung der totalen Transmission wird das gesamte vorwärts gestreute Licht mit auf einem Detektor eingefangen, wohingegen bei der in-line-Transmission nur das vorwärts gerichtete Licht auf dem Detektor eingefangen wird (bei einem Öffnungswinkel von normalerweise 5° der Messgeräte, auch das in diesem kleinen Winkel austretende Streulicht). Der Unterschied zwischen totaler und in-line-Transmission gibt ein Maß für die Streuung an. Diese resultiert im vorliegenden Fall hinsichtlich der Schicht insbesondere aus den Pigmentpartikeln der Schicht und den Poren.

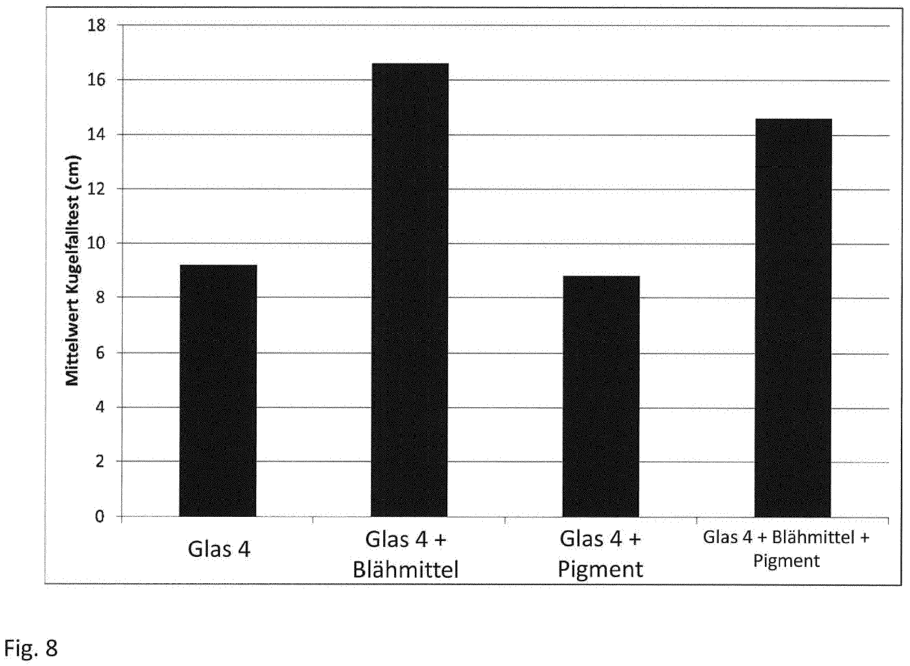

In Fig. 8 ist dargestellt, wie sich die Festigkeit, hier bestimmt in einem sogenannten Kugelfalltest, für ein beschichtetes Substrat in Abhängigkeit von der Zusammensetzung der Beschichtung ändert.

Sofern die Beschichtung lediglich ein Glas oder ein Glas zusammen mit einem Pigment umfasst, werden lediglich sehr geringe Festigkeitswerte im Kugelfalltest erzielt. Es handelt sich hierbei um Schichten, welche keine geschlossenen Poren umfassen und entsprechend nicht erfindungsgemäß sind.

Wird eine Beschichtung durch Aufbringen einer Suspension, welche neben Glas bzw. Glas und Pigment noch ein Blähmittel umfasst, hergestellt, entstehen dagegen Schichten entsprechend Ausführungsformen der vorliegenden Offenbarung, welche geschlossene Poren umfassen. Die Festigkeit eines so beschichteten Substrats liegt entsprechend deutlich höher als beim Fehlen eines Blähmittels.

Eine Sichtprüfung der Beschichtung gemäß Ausführungsformen der vorliegenden Offenbarung wird mittels folgender Schritte durchgeführt:
- Aufbringen einer Flüssigkeit auf einen Bereich auf der Oberfläche der Beschichtung des Substrates,
- Einwirken der Flüssigkeit für die Dauer von 15 Sekunden,
- Abwischen der Restfeuchte der Flüssigkeit mit einem trockenen Lappen,
- Umdrehen des Substrates, so dass die Beschichtung auf der dem Prüfer abgewandten Seite des Substrates angeordnet ist, und
- Prüfen mittels Sichtprüfung, ob eine Farbänderung in dem Bereich oder einem an diesen Bereich angrenzenden Bereich erkennbar ist, wobei
   a) die Sichtprüfung bei Tagesslicht gemäß Normlichtart D65 erfolgt oder unter Beleuchtung wie einer Glühlampe, Energiesparlampe, Leuchtstofflampe, oder einer Leuchtdiode,
   b) die Beleuchtungsstärke dabei wenigstens 500 Ix beträgt bei einer Entfernung zur Beschichtung, also zur Prüffläche, von weniger als 600 mm, und
   c) der Betrachtungswinkel des Prüfers zwischen 5° und 90°, vorzugsweise bei wenigstens 30°, liegt.

Als Flüssigkeit können Wasser, Öl, Alkohol und/oder Fensterreiniger verwendet werden.

Die vorstehend genannte Sichtprüfung umfasst dabei insbesondere die Prüfung, ob ein Wasserrand und/oder ein Wasserfleck von der der beschichteten Seite gegenüberliegenden Seite des Substrates aus sichtbar ist. Als sehr gut wird im vorliegenden Fall eine Schicht beschrieben, welche nach dem Test weder auf der Vorder- noch auf der Rückseite eine Farbänderung zeigt. Als gut wird im vorliegenden Fall eine Schicht beschrieben, welche nach dem Test auf der Vorderseite keine Farbänderung zeigt und auf der Rückseite einen abwischbaren Rand zeigt

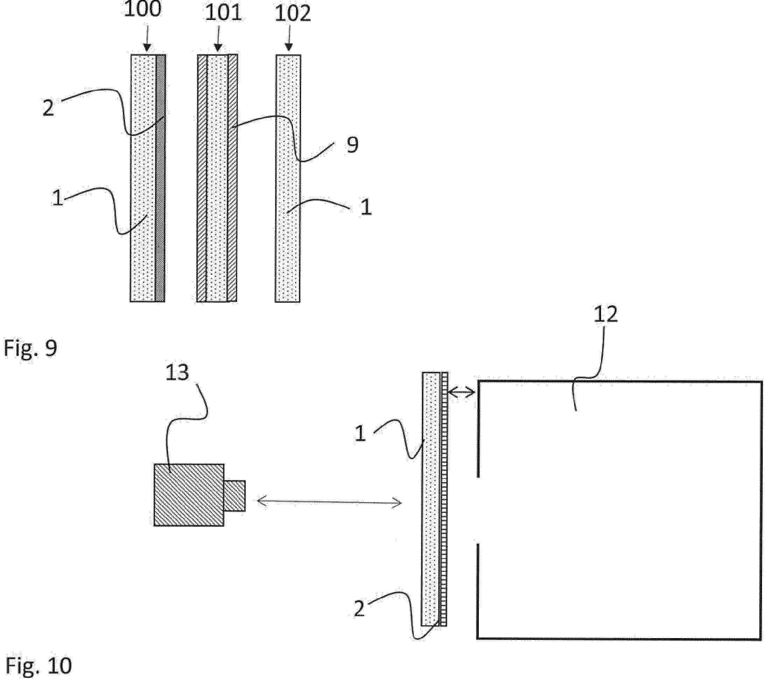

Fig. 9 zeigt schematisch einen möglichen Aufbau einer Backofentür. Die äußere Scheibe 100 weist hierbei auf einer Seite eine poröse Beschichtung 3 auf. Die unbeschichtete Seite des Substrates zeigt dabei nach außen. Die mittlere Scheibe 101 und die innere Scheibe 102 der Backofentür sind jeweils einseitig mit einer Beschichtung 9 beschichtet. Die Beschichtung 9 kann beispielsweise transparente, leitfähige Oxide aufweisen.

In Fig. 10 ist schematisch eine Messanordnung zur Bestimmung der Oberflächentemperaturen einer beschichteten Glasscheibe unter Laborbedingungen dargestellt. Hierbei wird ein Laborofen 12 auf eine Temperatur von 450°C geheizt. Der Ofen weist eine Öffnung mit einem Durchmesser von 3 cm auf. In einem Abstand von 2,5 cm zu dieser Öffnung wird die zu vermessende Glasscheibe 1 mit der Beschichtung 2 platziert, wobei die Beschichtung 2 in Richtung der Ofenöffnung zeigt. Die Oberflächentemperatur der beschichteten Glasscheibe 1 wird mit einem Pyrometer 13 (impac, IE 120/82L) ermittelt , wobei der Fokuspunkt auf die Außenseite der dekorierten Scheibe gesetzt wurde. Das Pyrometer 13 ist hierbei hinter einem Glassubstrat 14 und in einem Abstand von 50 cm zur zu vermessenden Glasscheibe 1 angeordnet.

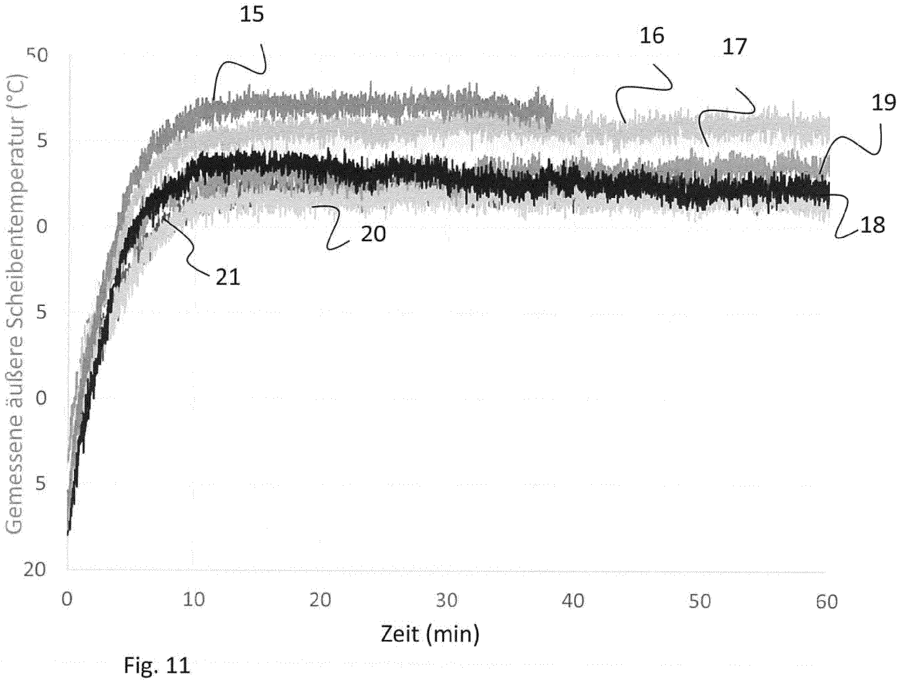

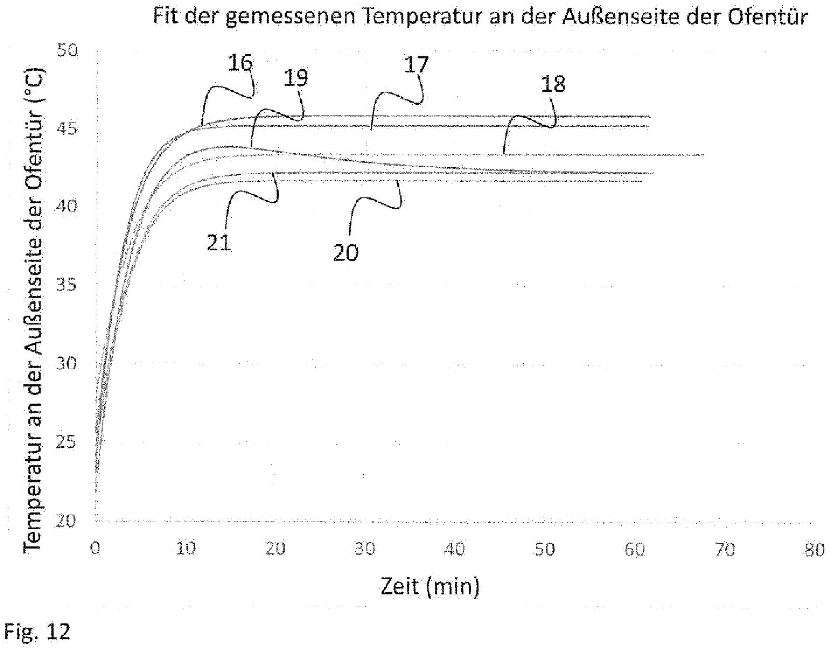

Fig. 11 und 12 zeigen den Temperaturverlauf auf der Außenseite verschiedener beschichteter Substrate in Abhängigkeit von der Betriebsdauer. Hierbei wurde der Ofen auf eine Temperatur von 450°C aufgeheizt und anschließend mit der in Fig. 10 dargestellten Messvorrichtung die Oberflächentemperatur der beschichteten Glasscheibe in Abhängigkeit von der Betriebsdauer bestimmt.

In Fig. 11 sind hierbei die gemessenen maximalen Temperaturen in Abhängigkeit zur Betriebsdauer des Ofens dargestellt, Fig. 12 zeigt einen durch Mittelwertbildung erhaltenen Fit der in Fig. 11 gezeigten Temperaturverläufe.

Die Kurven 15,16 und 17 entsprechen hierbei Temperaturverläufen von Vergleichsbeispielen, bei denen die Beschichtung zwar IR-reflektierende Pigmente aufweist, jedoch nicht porös ist. Die Kurven 18 bis 21 sind Temperaturverläufen von Ausführungsbeispielen zuzuordnen, bei denen die Beschichtung geschlossene Poren sowie IR-reflektierende Pigmente enthält.

In der nachfolgenden Tabelle werden die Vergleichs- sowie Ausführungsbeispiele näher charakterisiert. Die Beispiele weisen ein Kalknatronglas als Substrat auf, als Fritte bzw. Glasfluss wurde das Glas 1 der Tabelle verwendet. Der Einbrand erfolgte im Laborofen bei 680°C für 15 Minuten, wobei die Proben liegend gelagert wurden.

| **Kurve** | **Pigment (Vol%)** | **Schäumungsmittel (Vol%)** | **Typ Schäumungsmittel** | **Tmax (°C) nach 1h bei 450°C** | **Optische Dichte (Glasseite oben)** | **L*a*b* (SCE; Farbseite oben)** | **Glanz (60°)** | **Sklerometer (10N)** | **Sidolintest (Porozität)** |
|---|---|---|---|---|---|---|---|---|---|
| 16 | 20 | 0 | n.a. | 47,6 | 2,6 | 34,63/0,45/- 3,71 | 18,5 | ok | Sehr gut |
| 17 | 17,5 | 0 | n.a. | 46,9 | 2,1 | 36,04/0,44/- 4,09 | 55,9 | ok | Sehr gut |
| 21 | 17,5 | 20 | CaCO3 | 43,8 | 2,2 | 34,63/0,45/-3,71 | 4,0 | ok | gut |
| 20 | 17,5 | 10 | CaCO3 | 43,2 | 2,6 | 31,58/0,49/-3,56 | 17,5 | ok | gut |
| 19 | 17,5 | 20 | Rice starch | 45,7 | 2,1 | 21,38/0,6/-1,75 | 41,0 | ok | Sehr gut |
| 18 | 17,5 | 10 | Rice starch | 45,4 | 2,6 | 18,56/0,65/-1,95 | 50,5 | ok | Sehr gut |

Charakterisierung der in Fig. 11 un 12 gezeigten Proben

Die Beschichtungen der Vergleichsbeispiele 16 bis 18 wurden ohne die Verwendung von Blähmitteln hergestellt. Bei den Beispielen 19 bis 21 handelt es sich dagegen um poröse Beschichtungen. Bei der Herstellung dieser Beschichtungen wurden die in der oben aufgeführten Tabelle gezeigten Blähmittel verwendet, die so erhaltenen Beschichtungen weisen daher geschlossene Poren auf. Alle in Fig. 11 und Fig. 12 gezeigten Temperaturverläufe wurden mit Hilfe des in Fig. 10 dargestellten Messaufbaus erhalten. Die jeweiligen Beschichtungsmassen wurden mittels Siebdruck unter Verwendung eines 77 T-Siebs auf das Substrat aufgebracht.

Die Beschichtungen sämtlicher Beispiele 15 bis 21 enthalten IR-reflektierende Pigmente, so dass diese Beschichtungen eine gute IR-Reflektivität aufweisen. Dies äußert insbesondere darin, dass bei allen Beispielen bei einer Betriebsdauer des Ofens von 60 Minuten bei 450°C die gemessene Temperatur der Außenscheibe weniger als 50°C betrug. Es zeigt sich hierbei, dass die IR-Reflektivität der Beschichtung durch deren Porosität deutlich erhöht werden kann. So wurden bei den Proben 18 bis 21 geringere maximale Temperaturen gemessen als bei den Vergleichsproben 15 bis 17 mit einer dichten Beschichtung. Der gemessene Temperaturunterschied nach 60 Minuten Betriebszeit zwischen der dichten Probe 15 und der porösen Probe 20 beträgt hierbei mehr als 4°C. Es wird vermutet, dass die Poren innerhalb der Beschichtung Strukturen darstellen, an denen die IR-Strahlung zusätzlich gestreut werden kann.

Die Ausprägung dieses positiven Effekts auf die maximale Oberflächentemperatur der Scheibe scheint hierbei abhängig von der Struktur der Poren zu sein. Bei den Proben 18 und 19 wurde Reisstärke und bei den Proben 20 und 21 CaCO₃ als Blähmittel verwendet. Bei der Verwendung von Reisstärke als Blähmittel bilden sich vorzugsweise anisotrope Poren mit einem elipsoiden Querschnitt, während die Verwendung von CaCO₃ als Blähmittel zu weitgehend kugelförmigen Poren führt (vgl. Fig. 2 und 3).

Fig. 12 zeigt hierbei, dass bei den beschichteten Gläsern 20 und 21, deren Poren eine kugelförmige oder weitgehend kugelförmige Struktur aufweisen, die Isolationswirkung höher ist als bei den beschichteten Gläsern 18 und 19, deren Beschichtung elipsoide bzw. reisförmige Poren aufweisen.

Weiterhin geht aus Fig. 12 hervor, dass der Anteil des Blähmittels in der Paste sich auf die IR-Reflexion der entsprechenden Beschichtung auswirkt. So unterscheiden sich die Proben 20 und 21 lediglich in ihrem Gehalt an Blähmittel. Während der Blähmittelanteil in der Paste zur Herstellung der Beschichtung 21 20 Vol.-% beträgt, enthält die entsprechende Paste zur Herstellung der Beschichtung 20 lediglich 10 Vol.-% CaCO3als Blähmittel. Hierbei weist die Probe 20 eine bessere Isolationswirkung auf als die Probe 21, so dass nach einer Betriebsdauer von 180 Minuten die maximale Temperatur der Probe 20 um 0,8 °C geringer ist als maximale Temperatur der Probe 21 unter vergleichbaren Bedingungen.

Ein zu hoher Anteil an Blähmitteln in der Paste führt dazu, dass so viele Poren gebildet werden, dass diese sich teilweise verbinden und offene Poren entstehen. Ein Hinweis für offene Poren und eine damit einhergehende unebene Oberfläche Es wird hierbei davon ausgegangen, dass geschlossene Poren die IR-Reflexion begünstigen.

Eine weitere Möglichkeit, die IR-Reflektivität der Beschichtung zu erhöhen besteht in der Erhöhung der Schichtdicke, beispielsweise durch einen mehrfachen Auftrag der entsprechenden Paste bzw. Suspension auf dem Substrat. Dies wird an Hand der nachfolgenden Tabelle deutlich. Hierbei wurden die Proben mittels Siebdruck unter Verwendung eines 77T-Siebes auf das Substrat aufgebracht, getrocknet und optional ein zweites Mal mit einem 77T Sieb bedruckt ehe die Beschichtung liegend im Laborofen für 15 min bei 680°C eingebrannt wurde. In der Tabelle sind die Anzahl der erfolgten Druckvorgänge (Einfach- oder Doppeldruck) sowie die mit der in Fig. 10 gezeigten Messanordnung ermittelten maximalen Temperatur auf der Außenseite der Scheibe nach 60 Minuten Betriebsdauer des Ofens bei einer Temperatur von 450°C aufgeführt.

| **Sample ID** | **Anzahl Drucke** | **Anteil Pigment [Vol.-%]** | **Anteil Blähmittel [Vol.-%]** | **Verwendetes Blähmittel** | **Tmax (°C) after 1h heating at 450°C** | **Optische Dichte (Glasseite oben)** | **L*a*b* (Farbseite oben)** | **Glanz (60°)** | **Sklerometer (10N)** | **Sidolintest (Porozität)** |
|---|---|---|---|---|---|---|---|---|---|---|
| **21** | 1 | 17,5 | 20 | CaCO3 | 43,8 | 2,2 | 34,63/0,45/-3,71 | 4,0 | ok | gut |
| **21a** | 2 | 17,5 | 20 | CaCO3 | 41,3 | 3,2 | 36,04/0,44/-4,09 | 1,4 | ok | gut |
| **19** | 1 | 17,5 | 20 | Rice starch | 45,7 | 2,1 | 21,38/0,6/-1,75 | 41,0 | ok | sehr gut |
| **19a** | 2 | 17,5 | 20 | Rice starch | 45,2 | 4,2 | 23,49/0,42/-2,15 | 35,4 | ok | sehr gut |
| **18** | 1 | 17,5 | 10 | Rice starch | 45,4 | 2,6 | 18,56/0,65/-1,95 | 50,5 | ok | sehr gut |
| **18a** | 2 | 17,5 | 10 | Rice starch | 44,9 | 4,7 | 19,86/0,40/-2,38 | 48,9 | ok | sehr gut |

### Bezugszeichenliste

- 1: Glas- oder Glaskeramiksubstrat
- 2: Beschichtung umfassend geschlossene Poren
- 3, 30: geschlossene Poren
- 4: Transmissionskurve für unbeschichtetes Substrat
- 5: Transmissionskurve für nicht erfindungsgemäß beschichtetes Substrat
- 6,7,8,: Transmissionskurven von beschichteten Substraten gemäß Ausführungsformen der Offenbarung
- 9: Beschichtung umfassend leitfähige Oxide
- 10: Oberfläche des Substrats 1
- 12: Laborofen
- 13: Pyrometer
- 15,16,17: Temperaturverlaufskurven von Vergleichsbeispielen mit dichten Beschichtungen
- 18,19,20,21: Temperaturverlaufskurven von Ausführungsbeispielen mit porösen Beschichtungen
- 100: äußere Backofenscheibe
- 101: mittlere Backofenscheibe
- 102: innere Backofenscheibe

## Patentansprüche

1. Verfahren zur Beschichtung eines Glas- oder Glaskeramik-Substrats mit einer Beschichtung umfassend geschlossene Poren, wobei die Beschichtung als Barriere gegenüber dem Durchtritt von Fluiden ausgebildet ist, umfassend die folgenden Schritte:
a. Herstellen einer Suspension umfassend ein Glaspulver sowie ein Blähmittel,
b. Aufbringen der Suspension auf ein Substrat, sodass zumindest ein Teil des Substrats mit der Suspension belegt ist,
c. Vorzugsweise Fixieren der in Schritt b aufgebrachten Suspension auf dem Substrat, vorzugsweise bei einer Temperatur zwischen 0°C und 300°C,
d. Tempern des zumindest teilweise beschichteten Substrats bei einer Temperatur zwischen 500°C und 900°C, vorzugsweise zwischen 550°C und 900°C, , sodass sich das Blähmittel unter Bildung mindestens einer flüchtigen Substanz zersetzt und in der Beschichtung geschlossene Poren ausgebildet sind, sowie
e. Abkühlen des Substrats auf Raumtemperatur,
wobei das Blähmittel Stärke oder ein Phosphat ist.

2. Verfahren nach Anspruch 1, wobei die Beschichtung lateral strukturiert in Form eines vorgegebenen Musters auf das Substrat aufgebracht wird.

3. Verfahren nach einem der Ansprüche 1 oder 2, wobei nach dem Aufbringen der Suspension eine nicht haftende Auflage auf die Schicht aufgebracht wird und die Auflage während der Dauer der Temperungen auf der Schicht verbleibt.

4. Verfahren nach einem der Ansprüche 1 bis 3, wobei das Auftragen der Suspension mittels eines Druckverfahrens, insbesondere mittels Ink-Jet-Druck, Offset-Druck, Tampondruck oder Siebdruck, oder mittels Walzen, Fluten, Tauchen, Sprühen, Rakeln oder Spin-Coating erfolgt.

5. Glas- oder Glaskeramiksubstrat mit einer Beschichtung, hergestellt oder herstellbar mit einem Verfahren nach einem der Ansprüche 1 bis 4.

6. Glas- oder Glaskeramik-Substrat nach Anspruch 5, mit einer Beschichtung umfassend geschlossene Poren, wobei die Beschichtung als Barriere gegenüber dem Ein- und Durchtritt von Fluiden ausgebildet ist und eine Barrierewirkung entfaltet, wobei die Beschichtung mindestens 95 Gew.-% anorganische Bestandteile umfasst und eine Dicke zwischen 1,5 µm und 50 µm aufweist.

7. Glas- oder Glaskeramiksubstrat nach Anspruch 5 oder 6, aufweisend wenigstens eines der folgenden Merkmale:
die Beschichtung ist als hochtemperaturstabile Beschichtung, insbesondere für Temperaturen > 400°C, ausgebildet,
das Substrat ist scheibenförmig ausgebildet, wobei die Dicke des Substrats zwischen mindestens 1 mm und höchstens 10 mm, bevorzugt zwischen mindestens 2 mm und höchstens 5 mm und besonders bevorzugt zwischen mindestens 2 mm und höchstens 4 mm beträgt,
die Beschichtung ist lateral strukturiert in der Form aufgebracht, dass mindestens ein Bereich des Substrats frei von der Beschichtung ist,
die Beschichtung umfasst Farb- und/oder Effektmittel, insbesondere ein Farbpigment und/oder ein Effektpigment.

8. Substrat nach einem der Ansprüche 5 bis 7, wobei die Beschichtung IR-reflektierende Pigmente enthält, wobei die IR-reflektierenden Pigmente einen gemäß der ASTM G 173 ermittelten TSR-Wert von zumindest 20 %, bevorzugt zumindest 25% aufweisen und die Beschichtung bei einer Wellenlänge von 1500 nm eine Remission gemessen gemäß der ISO 13468 von zumindest 35 % aufweist, vorzugsweise aufweisend wenigstens eines der folgenden Merkmale
die Beschichtung weist im gesamten Wellenlängenbereich von 1500 nm bis 2500 nm eine Remission von zumindest 35%, bevorzugt von zumindest 40% und besonders bevorzugt von zumindest 45 % auf,
die Beschichtung weist bei einer Wellenlänge von 1500 nm eine Remission von zumindest 35%, bevorzugt zumindest 40% und ganz besonders bevorzugt zumindest 45% auf,
die IR-reflektierenden Pigmente weisen Partikel mit einer Größenverteilung mit einem d50-Wert im Bereich von 0,5 µm bis 2 µm, bevorzugt im Bereich von 0,8 µm bis 1,8 µm auf,
die IR-reflektierenden Pigmente weisen Partikel mit einer spezifischen Oberfläche im Bereich von 1,1 bis 8 m²/g, bevorzugt im Bereich von 1,8 bis 4,5 m²/g auf,
die Beschichtung umfasst ein chromhaltiges IR-reflektierendes Pigment, bevorzugt ein chromhaltiges Eisenoxid, ein chromhaltiges Hämatit und/oder einen chromhaltigen Spinell.

9. Substrat gemäß einem der Ansprüche 5 bis 8, wobei das Substrat ein Kalknatronglas oder ein Borosilikatglas, bevorzugt ein vorgespanntes Kalknatronglas oder ein vorgespanntes Borosilikatglas umfasst.

10. Substrat nach einem der 5 bis 9, wobei der resultierende thermische Ausdehnungskoeffizient der Beschichtung und der thermische Ausdehnungskoeffizient des Substrats voneinander um nicht mehr als 4*10⁻⁶/K im Temperaturbereich von 20°C bis 700°C voneinander abweichen.

11. Glas- oder Glaskeramiksubstrat gemäß einem der Ansprüche 5 bis 10, wobei die Glasmatrix der Beschichtung Bismutoxid, bevorzugt 8 bis 70 Gew.-% Bismutoxid und/oder Zinkoxid, bevorzugt 0,1 bis 70 Gew.-% Zinkoxid enthält.

12. Glas- oder Glaskeramiksubstrat gemäß einem der vorstehenden Ansprüche 5 bis 11, wobei die Glasmatrix der Beschichtung folgende Glaszusammensetzung in Gew.-% aufweist:
| | | |
|---|---|---|
| SiO₂ | 30-75 | bevorzugt 44-75 |
| Al₂O₃ | 0-25 | bevorzugt 0,2-25, besonders bevorzugt von 2-25 |
| B₂O₃ | 0-30 | bevorzugt 1-30, besonders bevorzugt 5-30 |
| Li₂O | 0-12 | |
| Na₂O | 0-25 | bevorzugt 0-15 |
| CaO | 0-12 | |
| MgO | 0-9 | |
| BaO | 0-27 | |
| SrO | 0-4 | |
| ZnO | 0-35 | bevorzugt 0-20 |
| Bi₂O₃ | 0-5 | |
| TiO₂ | 0-10 | bevorzugt 0-5 |
| ZrO₂ | 0-7 | |
| As₂O₃ | 0-1 | |
| Sb₂O₃ | 0-1,5 | |
| F | 0-3 | |
| Cl | 0-1 | bevorzugt 0 |
| H₂O | 0-3. | |

13. Glas- oder Glaskeramiksubstrat gemäß einem der vorstehenden Ansprüche 5 bis 11, wobei das Glas der Glasmatrix der Beschichtung folgende Zusammensetzung in Gew.-% aufweist:
| | |
|---|---|
| SiO₂ | 6-65, bevorzugt 10-65, besonders bevorzugt 15-65 |
| Al₂O₃ | 0-20 |
| B₂O₃ | 0-40, bevorzugt 1-30, besonders bevorzugt 3-30 |
| Li₂O | 0-12 |
| Na₂O | 0-18 |
| K₂O | 0-17 |
| CaO | 0-17 |
| MgO | 0-12 |
| BaO | 0-38 |
| SrO | 0-16 |
| ZnO | 0-70 |
| TiO₂ | 0-5 |
| ZrO₂ | 0-5 |
| Bi₂O₃ | 0-75, bevorzugt 0-60, besonders bevorzugt 5-60, ganz besonders bevorzugt 10-60 |
| CoO | 0-5 |
| Fe₂O₃ | 0-5 |
| MnO | 0-10 |
| CeO₂ | 0-3 |
| F | 0-3 |
| Cl | 0-1 |
| H₂O | 0-3. |

14. Substrat nach einem der Ansprüche 5 bis 13, wobei die Beschichtung als für elektromagnetische Strahlung im Wellenlängenbereich von 380 nm bis 780 nm im Wesentlichen undurchlässig ausgebildet ist und/oder τᵥᵢₛ (in-line-Transmission) im Wellenlängenbereich des sichtbaren Lichts einen Wert von weniger als 20% aufweist.

15. Verwendung eines Glas- oder Glaskeramiksubstrates nach einem der Ansprüche 5 bis 14 und/oder hergestellt in einem Verfahren nach einem der Ansprüche 1 bis 4, als Sichtscheibe in einem Ofen oder einem Kamin, insbesondere als Sichtscheibe für einen Backofen oder als Kaminsichtscheibe.

## Claims

1. A method for coating a glass or glass ceramic substrate with a coating that includes closed pores, said coating being formed as a barrier against a passage of fluids, comprising the steps of:
(a) preparing a suspension comprising a glass powder and an blowing agent;
(b) applying the suspension onto a substrate such that at least part of the substrate is covered by the suspension;
(c) preferably fixing the suspension applied in step (b) on the substrate, preferably at a temperature between 0 °C and 300 °C;
(d) thermally treating the at least partially coated substrate at a temperature between 500 °C and 900 °C, preferably between 550 °C and 900 °C, such that the blowing agent decomposes while forming at least one volatile substance and cause formation of closed pores in the coating; and
(e) cooling the substrate to room temperature;
wherein the blowing agent is starch or a phosphate.

2. The method according to claim 1, wherein the coating is applied to the substrate in a laterally patterned manner in the form of a predetermined pattern.

3. The method according to any one of claims 1 or 2, wherein after the application of the suspension, a non-adhering cover sheet is applied to the layer, and the cover sheet remains on the layer for the duration of the thermal treatment.

4. The method according to any one of claims 1 to 3, wherein the applying of the suspension is performed using a printing technique, in particular ink-jet printing, offset printing, pad printing, or screen printing, or by rolling, flooding, dipping, spray coating, doctor blading, or spin coating.

5. A glass or glass ceramic substrate, comprising a coating produced or producible by a method according to any one of claims 1 to 4.

6. The glass or glass ceramic substrate according to claim 5, comprising a coating that includes closed pores, wherein the coating is formed as a barrier against ingress and passage of fluids and exhibits a barrier effect, wherein the coating comprises at least 95 wt% of inorganic constituents and has a thickness between 1.5 µm and 50 µm.

7. The glass or glass ceramic substrate according to any one of claims 5 or 6, exhibiting at least one of the following characteristics:
the coating is a high temperature resistant coating, in particular for temperatures of more than 400 °C;
the substrate is a sheet-like substrate having a thickness between at least 1 mm and at most 10 mm, preferably between at least 2 mm and at most 5 mm, and most preferably between at least 2 mm and at most 4 mm;
the coating is applied in a laterally patterned form such that at least one portion of the substrate remains free of the coating;
the coating comprises colourants and/or effect agents, in particular a colour pigment and/or an effect pigment.

8. The substrate according to any one of claims 5 to 7, wherein the coating contains IR-reflecting pigments, wherein the IR-reflecting pigments have a TSR value of at least 20 %, preferably at least 25 %, determined according to ASTM G 173, and wherein for a wavelength of 1500 nm the coating exhibits a remission of at least 35 %, measured according to ISO 13468, preferably exhibiting at least one of the following characteristics:
in the entire wavelength range from 1500 nm to 2500 nm, the coating exhibits a remission of at least 35 %, preferably at least 40 %, and most preferably at least 45 %;
at a wavelength of 1500 nm, the coating exhibits a remission of at least 35 %, preferably at least 40 %, and most preferably at least 45 %;
the IR-reflecting pigments comprise particles with a size distribution having a d50 value in a range from 0.5 µm to 2 µm, preferably in a range from 0.8 µm to 1.8 µm;
the IR-reflecting pigments include particles having a specific surface area in a range from 1.1 to 8 m²/g, preferably in a range from 1.8 to 4.5 m²/g;
the coating includes a chromium-containing IR-reflecting pigment, preferably a chromium-containing iron oxide, a chromium-containing hematite, and/or a chromium-containing spinel.

9. The substrate according to any one of claims 5 to 8, wherein the substrate comprises a soda-lime glass or a borosilicate glass, preferably a toughened soda-lime glass or a toughened borosilicate glass.

10. The substrate according to any one of claims 5 to 9, wherein, in a temperature range from 20 °C to 700 °C, the resulting coefficient of thermal expansion of the coating and the coefficient of thermal expansion of the substrate do not differ from one another by more than 4 * 10⁻⁶ /K.

11. The glass or glass ceramic substrate according to any one of claims 5 to 10, wherein the glass matrix of the coating contains bismuth oxide, preferably 8 to 70 wt% of bismuth oxide, and/or zinc oxide, preferably 0.1 to 70 wt% of zinc oxide.

12. The glass or glass ceramic substrate according to any one of the preceding claims 5 to 11, wherein the glass matrix of the coating has the following glass composition, in wt%:
| | |
|---|---|
| SiO₂ | 30 - 75, preferably 44 - 75 |
| Al₂O₃ | 0 - 25, preferably 0.2 - 25, most preferably 2 - 25 |
| B₂O₃ | 0 - 30, preferably 1 - 30, most preferably 5 - 30 |
| Li₂O | 0 - 12 |
| Na₂O | 0 - 25, preferably 0 - 15 |
| CaO | 0 - 12 |
| MgO | 0 - 9 |
| BaO | 0 - 27 |
| SrO | 0 - 4 |
| ZnO | 0 - 35, preferably 0 - 20 |
| Bi₂O₃ | 0 - 5 |
| TiO₂ | 0 - 10, preferably 0 - 5 |
| ZrO₂ | 0 - 7 |
| As₂O₃ | 0 - 1 |
| Sb₂O₃ | 0 - 1.5 |
| F | 0 - 3 |
| Cl | 0 - 1, preferably 0 |
| H₂O | 0 - 3. |

13. The glass or glass ceramic substrate according to any one of the preceding claims 5 to 11, wherein the glass of the glass matrix of the coating has the following composition, in wt %:
| | |
|---|---|
| SiO₂ | 6 - 65, preferably 10 - 65, most preferably 15 - 65 |
| Al₂O₃ | 0 - 20 |
| B₂O₃ | 0 - 40, preferably 1 - 30, most preferably 3 - 30 |
| Li₂O | 0 - 12 |
| Na₂O | 0 - 18 |
| K₂O | 0 - 17 |
| CaO | 0 - 17 |
| MgO | 0 - 12 |
| BaO | 0 - 38 |
| SrO | 0 - 16 |
| ZnO | 0 - 70 |
| TiO₂ | 0 - 5 |
| ZrO₂ | 0 - 5 |
| Bi₂O₃ | 0 - 75, preferably 0 - 60, more preferably 5 - 60, most preferably 10 - 60 |
| CoO | 0 - 5 |
| Fe₂O₃ | 0 - 5 |
| MnO | 0 - 10 |
| CeO₂ | 0 - 3 |
| F | 0 - 3 |
| Cl | 0 - 1 |
| H₂O | 0 - 3. |

14. The substrate according to any one of claims 5 to 13, wherein the coating is substantially opaque to electromagnetic radiation in a wavelength range from 380 nm to 780 nm, and/or wherein τᵥᵢₛ (in-line transmittance) in the wavelength range of visible light has a value of less than 20 %.

15. Use of a glass or glass ceramic substrate according to any one of claims 5 to 14 and/or produced in a method according to any one of claims 1 to 4 as a viewing window in an oven or fireplace, in particular as a viewing window for a cooking oven or as a fireplace viewing window.

## Revendications

1. Procédé d'application sur un substrat en verre ou vitrocéramique, d'un revêtement comportant des pores fermés, le revêtement étant réalisé en tant que barrière pour empêcher le passage de fluides, comprenant les étapes suivantes :
a. préparation d'une suspension comprenant une poudre de verre ainsi qu'un agent gonflant,
b. application de la suspension sur un substrat, de sorte qu'au moins une partie du substrat est recouverte de la suspension,
c. de préférence, fixation sur le substrat, de la suspension appliquée à l'étape b, de préférence à une température comprise entre 0 °C et 300 °C,
d. recuit du substrat revêtu au moins en partie, à une température comprise entre 500 °C et 900 °C, de préférence entre 550 °C et 900 °C, de sorte que l'agent gonflant se décompose en formant au moins une substance volatile et des pores fermés sont formés dans le revêtement, ainsi que
e. refroidissement du substrat jusqu'à la température ambiante, sachant que l'agent gonflant est de l'amidon ou un phosphate.

2. Procédé selon la revendication 1, selon lequel le revêtement est appliqué sur le substrat de manière latéralement structurée, sous la forme d'un motif prédéfini.

3. Procédé selon une des revendications 1 ou 2, selon lequel, après application de la suspension, un dépôt non adhésif est appliqué sur la couche, et le dépôt reste en place sur la couche pendant la durée des recuits.

4. Procédé selon une des revendications 1 à 3, selon lequel l'application de la suspension est effectuée au moyen d'un procédé d'impression, en particulier par impression à jet d'encre, impression offset, tampographie ou sérigraphie, ou par enduction au rouleau, ruissellement, immersion, pulvérisation, enduction à la râcle ou enduction centrifuge.

5. Substrat en verre ou vitrocéramique doté d'un revêtement, fabriqué ou susceptible d'être fabriqué par un procédé selon une des revendications 1 à 4.

6. Substrat en verre ou vitrocéramique selon la revendication 5, doté d'un revêtement comportant des pores fermés, le revêtement étant réalisé en tant que barrière pour empêcher la pénétration et le passage de fluides et produisant un effet de barrière, le revêtement présentant au moins 95 % en poids de constituants inorganiques et une épaisseur comprise entre 1,5 µm et 50 µm.

7. Substrat en verre ou vitrocéramique selon la revendication 5 ou 6, présentant au moins une des caractéristiques suivantes :
le revêtement est réalisé sous forme de revêtement stable à haute température, notamment pour des températures > 400 °C,
le substrat est réalisé en forme de disque, l'épaisseur du substrat étant comprise entre au moins 1 mm et au maximum 10 mm, de préférence entre au moins 2 mm et au maximum 5 mm, et de manière particulièrement avantageuse entre au moins 2 mm et au maximum 4 mm,
le revêtement est appliqué de manière latéralement structurée, sous une forme telle qu'au moins une zone du substrat soit exempte de revêtement,
le revêtement comprend des matières colorantes et/ou à effet, en particulier un pigment coloré et/ou un pigment à effet.

8. Substrat selon une des revendications 5 à 7, dans lequel le revêtement contient des pigments réfléchissant les infrarouges, sachant que les pigments réfléchissant les infrarouges présentent une valeur TSR, déterminée selon ASTM G 173, d'au moins 20 %, de préférence d'au moins 25 %, et le revêtement présente, pour une longueur d'onde de 1 500 nm, une réflexion diffuse d'au moins 35 % mesurée selon ISO 13468, présentant de préférence au moins une des caractéristiques suivantes :
le revêtement présente, dans l'ensemble de la gamme de longueurs d'onde allant de 1 500 nm à 2 500 nm, une réflexion diffuse d'au moins 35 %, de préférence d'au moins 40 %, et de manière particulièrement avantageuse d'au moins 45 %,
le revêtement présente, pour une longueur d'onde de 1 500 nm, une réflexion diffuse d'au moins 35 %, de préférence d'au moins 40 %, et de manière particulièrement avantageuse d'au moins 45 %,
les pigments réfléchissant les infrarouges présentent des particules ayant une distribution de taille avec une valeur d50 comprise dans la plage allant de 0,5 µù à 2 µm, de préférence dans la plage allant de 0,8 µm à 1,8 µm,
les pigments réfléchissant les infrarouges présentent des particules ayant une surface spécifique comprise dans la plage allant de 1,1 à 8 m²/g, de préférence dans la plage allant de 1,8 à 4,5 m²/g,
le revêtement comprend un pigment réfléchissant les infrarouges qui contient du chrome, de préférence un oxyde de fer contenant du chrome, une hématite contenant du chrome et/ou un spinelle contenant du chrome.

9. Substrat selon une des revendications 5 à 8, dans lequel le substrat comporte un verre sodocalcique ou un verre borosilicate, de préférence un verre sodocalcique trempé ou un verre borosilicate trempé.

10. Substrat selon une des 5 à 9, dans lequel le coefficient de dilatation thermique résultant du revêtement et le coefficient de dilatation thermique du substrat ne diffèrent pas l'un de l'autre de plus de 4*10⁻⁶/K dans la plage de températures allant de 20 °C à 700 °C.

11. Substrat en verre ou vitrocéramique selon une des revendications 5 à 10, dans lequel la matrice de verre du revêtement contient de l'oxyde de bismuth, de préférence 8 à 70 % en poids d'oxyde de bismuth, et/ou de l'oxyde de zinc, de préférence 0,1 à 70 % en poids d'oxyde de zinc.

12. Substrat en verre ou vitrocéramique selon une des revendications 5 à 11 précédentes, dans lequel la matrice de verre du revêtement présente la composition de verre suivante, en % en poids :
| | | |
|---|---|---|
| SiO₂ | 30 à 75 | de préférence 44 à 75 |
| Al₂O₃ | 0 à 25 | de préférence 0,2 à 25, de manière particulièrement avantageuse 2 à 25, |
| B₂O₃ | 0 à 30 | de préférence 1 à 30, de manière particulièrement avantageuse 5 à 30, |
| Li₂O | 0 à 12 | |
| Na₂O | 0 à 25 | de préférence 0 à 15, |
| CaO | 0 à 12 | |
| MgO | 0 à 9 | |
| BaO | 0 à 27 | |
| SrO | 0 à 4 | |
| ZnO | 0 à 35 | de préférence 0 à 20 |
| Bi₂O₃ | 0 à 5 | |
| TiO₂ | 0 à 10 | de préférence 0 à 5 |
| ZrO₂ | 0 à 7 | |
| As₂O₃ | 0 à 1 | |
| Sb₂O₃ | 0 à 1,5 | |
| F | 0 à 3 | |
| Cl | 0 à 1 | de préférence 0 |
| H₂O | 0 à 3. | |

13. Substrat en verre ou vitrocéramique selon une des revendications 5 à 11 précédentes, dans lequel le verre de la matrice de verre du revêtement présente la composition suivante, en % en poids :
| | |
|---|---|
| SiO₂ | 6 à 65, de préférence 10 à 65, de manière particulièrement avantageuse 15 à 65 |
| Al₂O₃ | 0 à 20 |
| B₂O₃ | 0 à 40, de préférence 1 à 30, de manière particulièrement avantageuse 3 à 30, |
| Li₂O | 0 à 12 |
| Na₂O | 0 à 18 |
| K₂O | 0 à 17 |
| CaO | 0 à 17 |
| MgO | 0 à12 |
| BaO | 0 à 38 |
| SrO | 0 à 16 |
| ZnO | 0 à 70 |
| TiO₂ | 0 à 5 |
| ZrO₂ | 0 à 5 |
| Bi₂O₃ | 0 à 75, de préférence 0 à 60, notamment de préférence 5 à 60, |
| | de manière particulièrement avantageuse 10 à 60 |
| CoO | 0 à 5 |
| Fe₂O₃ | 0 à 5 |
| MnO | 0 à 10 |
| CeO₂ | 0 à 3 |
| F | 0 à 3 |
| Cl | 0 à 1 |
| H₂O | 0 à 3. |

14. Substrat selon une des revendications 5 à 13, dans lequel le revêtement est réalisé de manière à être sensiblement imperméable au rayonnement électromagnétique dans la gamme de longueurs d'onde allant de 380 nm à 780 nm, et/ou Tᵥᵢₛ (transmission en ligne) dans la gamme de longueurs d'onde de la lumière visible présente une valeur inférieure à 20 %.

15. Utilisation d'un substrat en verre ou vitrocéramique selon une des revendications 5 à 14 et/ou fabriqué par un procédé selon une des revendications 1 à 4, en tant que vitre d'un poêle ou d'une cheminée, en particulier en tant que vitre destinée à un four de cuisson ou en tant que vitre de cheminée.
